# EUROPEAN PATENT SPECIFICATION

(11) **EP 4 529 292 B1**
(45) Date of publication and mention of the grant of the patent: **02.12.2026**
(21) Application number: 23893295.8
(22) Date of filing: 18.08.2023
(51) Int. Cl.: H04W 52/02, H04L 12/12

(54) **METHOD FOR REDUCING POWER CONSUMPTION AND ELECTRONIC DEVICE**
VERFAHREN ZUR REDUZIERUNG DES STROMVERBRAUCHS UND ELEKTRONISCHE VORRICHTUNG
PROCÉDÉ DE RÉDUCTION DE CONSOMMATION D'ÉNERGIE ET DISPOSITIF ÉLECTRONIQUE

(30) Priority: 24.11.2022 CN 202211480812
(43) Date of publication of application: 26.03.2025
(73) Proprietor: Honor Device Co., Ltd., Shenzhen, Guangdong 518040 (CN)
(72) Inventor: ZHU, Zhaoxin, Shenzhen, Guangdong 518040 (CN); MA, Hongyang, Shenzhen, Guangdong 518040 (CN)
(74) Representative: MERH-IP Matias Erny Reichl Hoffmann Patentanwälte PartG mbB
(86) International application number: PCT/CN2023/113754
(87) International publication number: WO 2024/109197

(56) References cited:
- CN-A- 107 172 304
- CN-A- 110 881 212
- CN-A- 112 867 107
- CN-A- 113 840 358
- CN-A- 114 697 932
- US-A1- 2006 002 383
- US-A1- 2007 211 745

## Description

### TECHNICAL FIELD

This application relates to the field of smart terminal technologies, and in particular, to a method for reducing power consumption and an electronic device.

### BACKGROUND

A lower traffic and a higher network speed make Wi-Fi (wireless fidelity, wireless fidelity) the preferred way to access the network for many users.

However, when a mobile terminal is standby, irregular sending of Wi-Fi packets (or Wi-Fi data packets) interrupts the standby state of the mobile terminal. In this case, the mobile terminal cannot enter the real standby state due to being waked up, leading to a problem of high power consumption when the mobile terminal is standby.
Document CN112867107A relates to a wireless fidelity Wi-Fi chip control method that comprises the steps: controlling a WIFI chip to be powered off when a processor determines that the Wi-Fi chip is in an abnormal high power consumption state according to the signal processing information transmitted by the Wi-Fi chip, enabling the Wi-Fi chip to stop working, and enabling the Wi-Fi chip to stop working.
Document US2007/211745A1 relates to a standby time improvements method in which an associated wireless station wakes from a power save mode only at intervals corresponding to delivery times of the types of traffic that the wireless station has elected to receive.
Document CN114697932A relates to a method for reducing power consumption. The method comprises the following steps: establishing Wi-Fi connection with second electronic equipment through a Wi-Fi module; if it is determined that the first condition is satisfied, performing power saving processing on the Wi-Fi module; the first condition comprises any one or more of the following items: the number of the first messages received through the Wi-Fi connection in the first time period is greater than or equal to a first threshold value; the number of times of preset identification position bit errors of a second message received through the Wi-Fi connection in a second time period is greater than or equal to a second threshold value; the Wi-Fi connection disconnection frequency or the Wi-Fi connection establishment frequency in the third time period is greater than or equal to a third threshold value; the sending period of the third message received through the Wi-Fi connection is inaccurate; the working duration of the Wi-Fi module is greater than or equal to a preset duration threshold, and the number of messages sent and/or received through the Wi-Fi connection is less than or equal to a first preset number threshold.

### SUMMARY

The present invention is defined in the appended independent claims to which reference should be made. Advantageous features are set out in the appended dependent claims.

### BRIEF DESCRIPTION OF DRAWINGS

FIG. 1 is a schematic diagram of an application scenario shown by way of example;
FIG. 2 is a schematic diagram of a structure of a communication system shown by way of example;
FIG. 3 is a schematic diagram of a hardware structure of an electronic device shown by way of example;
FIG. 4 is a schematic diagram of a software structure of an electronic device shown by way of example;
FIG. 5 is a schematic diagram of module interaction shown by way of example;
FIG. 6 is a schematic flowchart of a processing procedure of a power-saving management and control daemon in a procedure of a method for reducing power consumption shown by way of example;
FIG. 7A is a schematic flowchart of a processing procedure of a power-saving application in a procedure of a method for reducing power consumption shown by way of example;
FIG. 7B is a schematic flowchart of a processing procedure of a power-saving application in a procedure of a method for reducing power consumption shown by way of example;
FIG. 8 is a schematic diagram of setting of a Wi-Fi management and control flag bit shown by way of example; and
FIG. 9 is a schematic diagram of restoring Wi-Fi management and control shown by way of example.

### DESCRIPTION OF EMBODIMENTS

When using a smart terminal, a user often needs to access the Internet. In some examples, if a modem (Modem) is provided, the smart terminal may establish a communication connection with another device via a mobile communication network in a wireless communication connection mode such as 2G/3G/4G/5G to obtain a corresponding service. Alternatively, when a wireless local area network module is provided, the smart terminal may establish a communication connection with another device via the Internet or a mobile communication network (or referred to as a mobile network, a mobile data network, or the like) by using the provided wireless local area network module (for example, a Wi-Fi module) in a wireless local area network (for example, a Wi-Fi network) connection mode. For example, the smart terminal establishes a communication connection with a wireless router by using a Wi-Fi technology to access the Internet via the wireless router and interact with another device.

Because Wi-Fi has a lower traffic and a higher network speed, users usually prefer to use Wi-Fi to access the network. It can be learned that power consumption of the Wi-Fi module is one of critical indicators affecting the battery life of the smart terminal. Reducing a scanning frequency of the Wi-Fi module or controlling the Wi-Fi module to enter a sleep state prolongs the battery life of the smart terminal to some extent. However, after entering the sleep state, the Wi-Fi module may be waked up, resulting in high power consumption of the smart terminal in a standby mode.

In a specific application scenario, when the smart terminal is in a standby state, especially in a night standby state (or referred to as a night long-term standby state), the smart terminal may be frequently waked up by Wi-Fi packets due to some unnecessary external services or abnormal services. The smart terminal being waked up by the Wi-Fi packets conforms to a communication protocol specification. However, in this case, there is no actual effective service after the smart terminal is waked up. This undoubtedly affects power consumption of the smart terminal.

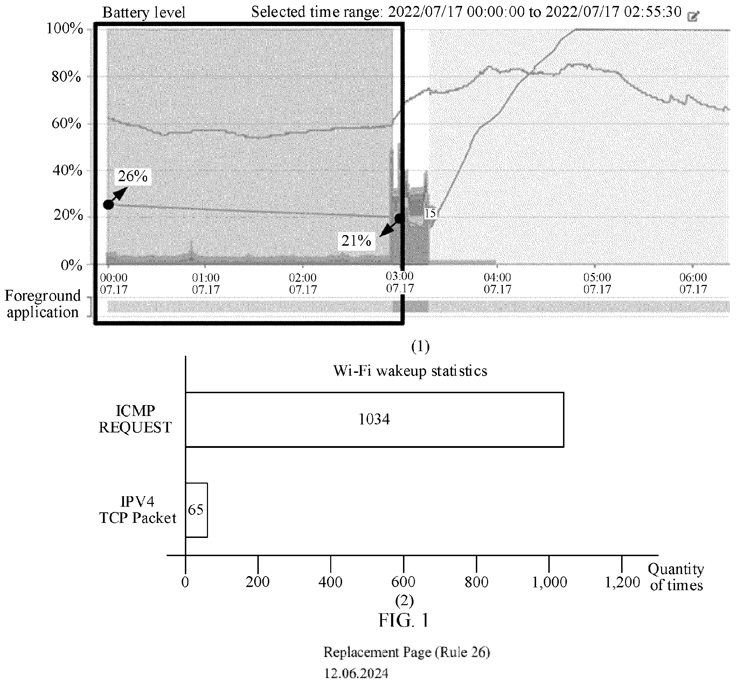

For example, FIG. 1 shows power consumption of a smart terminal in a standby mode. An available battery capacity of the smart terminal is 4,700 mAh. As shown in (1) in FIG. 1, during a night time period from 00:00:00 to 02:55:30, the smart terminal is in a long-term standby state, and battery power of the smart terminal drops from 26% (that is, 1,175 mAh) to 21% (that is, 940 mAh), with a total power consumption of 5% (that is, 235 mAh). In other words, within standby duration of two hours, 55 minutes and 30 seconds, power consumption of the smart terminal when a screen is off is as high as 235 mAh, resulting in a standby current of the smart terminal in a screen-off state as high as 80 mA.

For a Wi-Fi packet reception status of the smart terminal in a screen-off scenario at night, refer to (2) in FIG. 1. As shown in (2) in FIG. 1, during a time period from 00:00:00 to 02:55:30, a quantity of times the smart terminal is waked up by an ICMP (Internet Control Message Protocol, Internet control message protocol) REQUEST (request) packet reaches 1,034. It can be learned that the smart terminal is frequently waked up by the ICMP REQUEST data packet and receives a plurality of ICMP REQUEST data packets per minute on average. The ICMP REQUEST data packet is mainly used for determining a state of the smart terminal. In addition, the smart terminal is frequently waked up by the ICMP REQUEST data packet, which may be caused by an anomaly in the device that sends the ICMP REQUEST data packet.

In this way, during a screen-off standby time period the smart terminal, especially during a screen-off standby time period at night, the smart terminal system is frequently waked up by the Wi-Fi packet, usually with a wakeup frequency of up to a plurality of times one minute and long duration.

Through analysis, when an application processor (AP) of the smart terminal does not have a broadcast lock, both multicast and broadcast data packets are filtered out by Wi-Fi module firmware, so that the smart terminal is only waked up by a received unicast data packet in a screen-off standby state. The Wi-Fi module firmware only parses a packet header when parsing the unicast data packet, and is not aware of a specific service in the unicast data packet. As a result, the Wi-Fi module firmware cannot intercept various unicast data packets, but directly wakes up the AP to process these data packets.

The smart terminal is waked up by the Wi-Fi packet, and this is too costly for the system. Frequent wakeup has a great impact on power consumption of the smart terminal. In addition, when the smart terminal is waked up, another service of the system is often running, which further amplifies an impact of the power consumption. In this case, how to reduce standby power consumption of smart terminal device, especially long-term standby power consumption at night, is an urgent problem to be resolved.

If the smart terminal is frequently waked up by some Wi-Fi packets in the screen-off standby state, it may be caused by an anomaly in a peer device that sends these Wi-Fi packets. Although such Wi-Fi packets comply with communication protocol rules, there is no specific service to be executed on a smart terminal side and it is meaningless for a user. Considering that there is no user-perceptible service when the smart terminal is in the screen-off standby state, frequently waking up the smart terminal with such Wi-Fi packets is not necessary for either the smart terminal or the user.

To resolve the foregoing technical problem, an embodiment of this application provide a method for reducing power consumption. In this method, a smart terminal identifies an abnormal Wi-Fi packet wakeup events, and power off processing (that is, disconnecting from a power supply) is performed on a Wi-Fi chip when there is no user-perceptible service, to reduce power consumption of a Wi-Fi module, thereby reducing overall power consumption of the smart terminal and achieving a purpose of reducing power consumption.

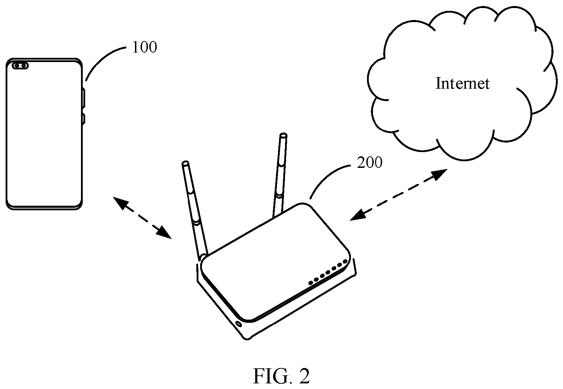

FIG. 2 is a schematic diagram of a structure of a communication system according to an embodiment of this application. The communication system includes an electronic device 100 and an electronic device 200. Various applications may be installed and run on the electronic device 100 to provide users with rich functions. Generally, the electronic device 100 may access the Internet or a mobile communication network via the electronic device 200 to communicate with servers corresponding to various applications.

For example, the electronic device 100 may be a mobile phone, a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, a vehicle-mounted device, a smart car, a smart speaker, a robot, or the like. A specific form of the electronic device 100 is not specially limited in this application. For example, the electronic device 200 may be a relay device such as a router, and a specific form of the electronic device 200 is not specially limited in this application.

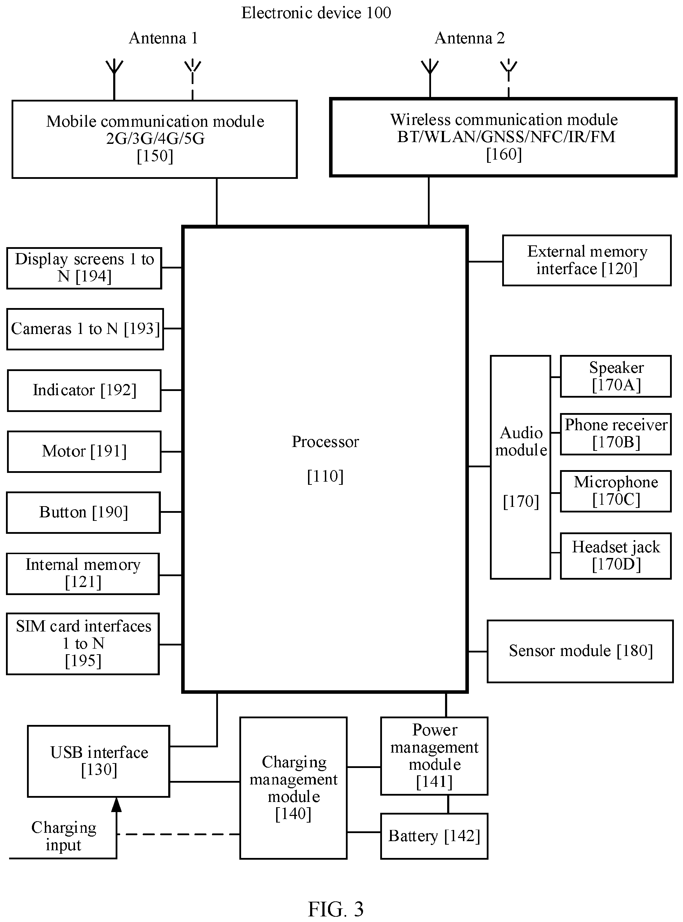

FIG. 3 is a schematic diagram of a structure of an electronic device 100. Optionally, the electronic device 100 may be a terminal, or may be referred to as a terminal device, a smart terminal, or the like. The terminal may be a device such as a cellular phone (cellular phone) or a tablet computer (pad). This is not limited in this application. It should be noted that the schematic diagram of the structure of the electronic device 100 is applicable to the mobile phone in FIG. 2. It should be understood that the electronic device 100 shown in FIG. 3 is merely an example of the electronic device, and the electronic device 100 may have more or fewer components than those shown in the figure, may combine two or more components, or may have a different component configuration. Various components shown in FIG. 3 may be implemented in hardware, software, or a combination of hardware and software including one or more signal processing and/or application-specific integrated circuits.

The electronic device 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like. The sensor module 180 may include a pressure sensor, a gyroscope sensor, an acceleration sensor, a temperature sensor, a motion sensor, a barometric pressure sensor, a magnetic sensor, a distance sensor, an optical proximity sensor, a fingerprint sensor, and a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a timing signal, to complete control of instruction fetching and instruction execution.

A memory may be further disposed in the processor 110 and is configured to store instructions and data. In some embodiments, the memory in the processor 110 is a cache.

The USB interface 130 is an interface that complies with a USB standard specification, and may be specifically a Mini USB interface, a Micro USB interface, a USB Type C interface, or the like. The USB interface 130 may be configured to be connected to the charger to charge the electronic device 100, or may be configured to transmit data between the electronic device 100 and a peripheral device. The USB interface may alternatively be configured to connect to a headset to play audio through the headset. The interface may alternatively be configured to be connected to another electronic device such as an AR device.

The charging management module 140 is configured to receive charging input from the charger. The charger may be a wireless charger or a wired charger. In some embodiments of wired charging, the charging management module 140 may receive charging input from the wired charger through the USB interface 130. In some embodiments of wireless charging, the charging management module 140 may receive wireless charging input through a wireless charging coil of the electronic device 100. When charging the battery 142, the charging management module 140 may further supply power to the electronic device 100 by using the power management module 141.

The power management module 141 is configured to be connected to the battery 142, the charging management module 140, and the processor 110. The power management module 141 receives input from the battery 142 and/or the charging management module 140, and supplies power to the processor 110, the internal memory 121, an external memory, the display screen 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may further be reused to improve utilization of the antennas. For example, the antenna 1 may be reused as a diversity antenna of a wireless local area network. In some other embodiments, the antennas may be used in combination with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like.

The wireless communication module 160 may provide a solution applied to the electronic device 100 for wireless communication including a wireless local area network (wireless local area networks, WLAN) (such as a Wi-Fi network), Bluetooth (bluetooth, BT), and a global navigation satellite system (global navigation satellite system, GNSS), frequency modulation (frequency modulation, FM), a near field communication (near field communication, NFC) technology, an infrared (infrared, IR) technology, and the like.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 implements a display function by using the GPU, the display screen 194, the application processor, and the like. The GPU is a microprocessor for image processing and connects the display screen 194 and the application processor. The GPU is configured to perform mathematical and geometric calculations for graphics rendering. The processor 110 may include one or more GPUs that execute program instructions to generate or change display information.

The display screen 194 is configured to display an image, a video, and the like. The display screen 194 includes a display panel. In some embodiments, the electronic device 100 may include 1 or N display screens 194, and N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to naked eyes. The ISP may further perform algorithm optimization on noise, brightness, and skin color of the image. The ISP may further optimize parameters such as exposure and color temperature of a photographed scene. In some embodiments, the ISP may be disposed in the camera 193.

The camera 193 is configured to capture a still image or a video. An optical image of an object is generated through the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB and YUV. In some embodiments, the electronic device 100 may include 1 or N cameras 193, and N is a positive integer greater than 1.

The external memory interface 120 may be configured to be connected to an external storage card such as a micro SD card, to expand a storage capability of the electronic device 100. The external storage card communicates with the processor 110 through the external memory interface 120, to implement a data storage function.

The internal memory 121 may be configured to store computer-executable program code, and the executable program code includes instructions. The processor 110 runs the instructions stored in the internal memory 121, to implement various functional applications and data processing of the electronic device 100. For example, the electronic device 100 is enabled to implement the method for reducing power consumption in embodiments of this application. The internal memory 121 may include a program storage area and a data storage area. The program storage area may store an operating system, an application required by at least one function (such as a voice playing function and an image playing function), and the like. The data storage area may store data (for example, audio data and a phone book) and the like created when the electronic device 100 is used. In addition, the internal memory 121 may include a high-speed random access memory, and may further include a non-volatile memory, for example, at least one magnetic disk storage device, a flash memory device, or a universal flash storage (universal flash storage, UFS).

The electronic device 100 may implement an audio function by using the audio module 170, the speaker 170A, the phone receiver 170B, the microphone 170C, the headset jack 170D, the application processor, and the like, for example, implement a music playback function and a recording function.

The audio module 170 is configured to convert digital audio information into analog audio signal output, and is also configured to convert analog audio input into a digital audio signal. The audio module 170 may further be configured to encode and decode an audio signal. In some embodiments, the audio module 170 may be disposed in the processor 110, or some function modules of the audio module 170 are disposed in the processor 110.

The speaker 170A, also referred to as a "horn", is configured to convert an electrical audio signal into a sound signal. The electronic device 100 may be configured to listen to music or answer a call in a hands-free mode by using the speaker 170A. In some embodiments, a plurality of speakers 170A may be disposed in the electronic device 100.

The phone receiver 170B, also referred to as a "handset", is configured to convert an electrical audio signal into a sound signal. When the electronic device 100 is configured to answer a call or receive voice information, the phone receiver 170B may be put close to a human ear to receive a voice.

The microphone 170C, also referred to as a "mic" or "mike", is configured to convert a sound signal into an electrical signal. When making a call or sending voice information, a user can speak close to the microphone 170C with the human mouth to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may be alternatively disposed in the electronic device 100, to collect a sound signal, implement noise reduction, recognize a sound source, implement a directional recording function, and the like.

The headset jack 170D is configured to be connected to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor is configured to sense a pressure signal, and may convert the pressure signal into an electrical signal. In some embodiments, the pressure sensor may be disposed on the display screen 194. The electronic device 100 may further calculate a touch position based on a detection signal of the pressure sensor.

The gyroscope sensor may be configured to determine a motion posture of the electronic device 100. In some embodiments, angular velocity of the electronic device 100 around three axes (to be specific, x, y, and z axes) may be determined by using the gyroscope sensor.

The acceleration sensor may detect an acceleration value of the electronic device 100 in each direction (generally three axes). When the electronic device 100 is still, a magnitude and a direction of gravity may be detected by the acceleration sensor. The acceleration sensor may be further configured to identify a posture of the electronic device, and is applied to applications such as landscape/portrait switching and a pedometer.

The touch sensor is also referred to as a "touch panel". The touch sensor may be disposed on the display screen 194. The touch sensor and the display screen 194 form a touch screen, which is also referred to as a "touchscreen". The touch sensor is configured to detect a touch operation performed on or near the touch sensor. The touch sensor may transfer the detected touch operation to the application processor to determine a type of a touch event.

The button 190 includes a power key (or referred to as a power button), a volume key, and the like. The button 190 may be a mechanical button, or a touch-type button. The electronic device 100 may receive key input, and generate a key signal input related to user setting and function control of the electronic device 100.

The motor 191 may generate a vibration prompt. The motor 191 may be configured to provide an incoming call vibration prompt or touch vibration feedback. For example, touch operations performed on different applications (for example, photo taking and audio playing) may correspond to different vibration feedback effects.

The indicator 192 may be an indicator light, and may be configured to indicates a charging state or a battery change, or may be further configured to indicate a message, a missed call, a notification, and the like.

A software system of the electronic device 100 may use a layered architecture, an event-driven architecture, a micro core architecture, a micro service architecture, or a cloud architecture. In this embodiment of this application, an Android system with a layered architecture is used as an example to describe the software structure of the electronic device 100.

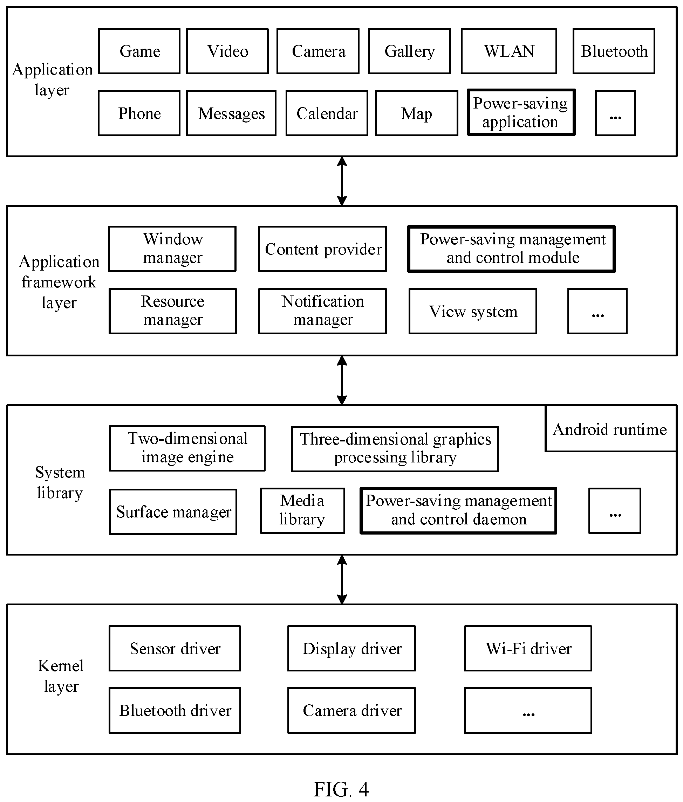

FIG. 4 is a block diagram of a software structure of an electronic device 100 according to an embodiment of this application.

In a layered architecture of the electronic device 100, software is divided into several layers, and each layer has a clear role and responsibility. The layers communicate with each other through a software interface. In some embodiments, an Android system is divided into four layers: an application layer, an application framework layer, Android runtime (Android Runtime) and a system library, and a kernel layer from top to bottom.

The application layer may include a series of application packages.

As shown in FIG. 4, the application package may include applications such as Game, Video, Camera, Gallery, WLAN, Bluetooth, Phone, Messages, Calendar, Map, and a power-saving application.

For example, the power-saving application may be power-saving software such as Power-saving Elf. The power-saving application may conveniently control some power-consuming hardware and settings through a power-saving mode, and intelligently prompt a current power-consuming program, a malicious background service, and the like, to maximize device standby time and effectively save power.

In this embodiment of this application, the power-saving application may be configured to determine whether the electronic device enters a standby state (specifically, to determine whether the electronic device enters a night standby state). The power-saving application may be configured to query user setting information of the electronic device, a network connection status, and the like of the device, for example, to query whether a user enables both a Wi-Fi function and a cellular data function at the same time, whether the user enables a "stay connected while asleep" function, whether the user enables a "find device" function, to query a connection status of a Wi-Fi network of the device, and the like. The power-saving application may set whether to start Wi-Fi management and control. In addition, the power-saving application may query whether there is a user-perceptible service and the like in the electronic device.

The application framework layer provides an application programming interface (application programming interface, API) and a programming framework for the applications at the application layer. The application framework layer includes some predefined functions.

As shown in FIG. 4, the application framework layer may include a window manager, a content provider, a resource manager, a notification manager, a view system, a power-saving management and control module, and the like.

The window manager is configured to manage a window program. The window manager may obtain a size of a display screen, determine whether there is a status bar, perform screen locking, perform screen capturing, and so on.

The content provider is configured to store and obtain data and make the data accessible to an application. The data may include a video, an image, audio, phone calls made and answered, a browsing history, favorites, a phone book, and the like.

The resource manager provides various resources such as a localized character string, an icon, an image, a layout file, and a video file for an application.

The notification manager enables an application to display a notification information in a status bar. The notification information may be used for conveying an informative message that may disappear automatically after a short period of time without user interaction. For example, the notification information is for notifying download completion, a message prompt, and the like. The notification information may alternatively be a notification that appears on a top status bar of the system in a form of a graph or a scroll bar text, for example, a notification of an application running in the background, or a notification that appears on the screen in a form of a dialog window. For example, the notification information may alternatively be text information displayed in the status bar, a prompt tone made, vibration of the electronic device, or flash of an indicator light.

The view system includes a visual control, for example, a control for text displaying or a control for picture display. The view system may be configured to construct an application. A display interface may include one or more views. For example, a display interface including a messages notification icon may include a view for text display and a view for picture display.

The power-saving management and control module is configured to perform power-saving management and control on the electronic device. In this embodiment of this application, the power-saving management and control module may be configured to perform power off processing on a Wi-Fi module (for example, a Wi-Fi chip). After receiving indication information "there is no user-perceptible service in the electronic device currently" sent by the power-saving application, the power-saving management and control module sends a management and control instruction to a Wi-Fi driver to enable the Wi-Fi driver to control the Wi-Fi module (such as the Wi-Fi chip) to power off.

The Android Runtime includes a kernel library and a virtual machine. The Android Runtime is responsible for scheduling and managing the Android system.

The kernel library includes two parts. One part is a functional function that the Java language needs to invoke, and the other part is an Android kernel library.

The application layer and the application framework layer are run in the virtual machine. The virtual machine executes Java files of the application layer and the application framework layer as binary files. The virtual machine is configured to perform functions such as object lifecycle management, stack management, thread management, security and anomaly management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL), and a power-saving management and control daemon.

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, such as MPEG4, H.264, MP3, AAC, AMR, JPG, and PNG.

The three-dimensional graphics processing library is configured to implement three-dimensional drawing, image rendering, compositing, layer processing, and the like.

The 2D graphics engine is a drawing engine for 2D drawing.

In this embodiment of this application, the power-saving management and control daemon may determine, based on a Wi-Fi packet reported by the Wi-Fi driver, whether there is an abnormal Wi-Fi packet wakeup event (in other words, whether the electronic device is waked up abnormally) in the electronic device, and report to the power-saving application when the abnormal Wi-Fi packet wakeup event is identified. The power-saving management and control daemon may further report, to a cloud, received packet data and a Wi-Fi anomaly management and control situation, and update, based on data delivered by the cloud, a policy for identifying the abnormal Wi-Fi packet wakeup event.

The kernel layer is a layer between hardware and software. The kernel layer includes at least a sensor driver, a display driver, a Wi-Fi driver, a Bluetooth driver, a camera driver, and the like. The hardware includes at least a processor, a display screen, a Wi-Fi module (for example, a Wi-Fi chip), a sensor, and the like.

It may be understood that the layers in the software structure shown in FIG. 4 and the components included in each layer do not constitute a specific limitation on the electronic device 100. In some other embodiments of this application, the electronic device 100 may include more or fewer layers than those shown in the figure, and each layer may include more or fewer components. This is not limited in this application.

It may be understood that to implement the method for reducing power consumption in embodiments of this application, the electronic device includes corresponding hardware and/or software modules for performing the functions. Algorithm steps in examples described with reference to embodiments disclosed in this specification may be implemented by hardware or a combination of hardware and computer software in this application. Whether a function is performed by hardware or computer software driving hardware depends on particular applications and design constraints of the technical solution. A person of skill in the art may use different methods to implement the described functions with reference to embodiments for each particular application, but it should not be considered that the implementation goes beyond the scope of this application.

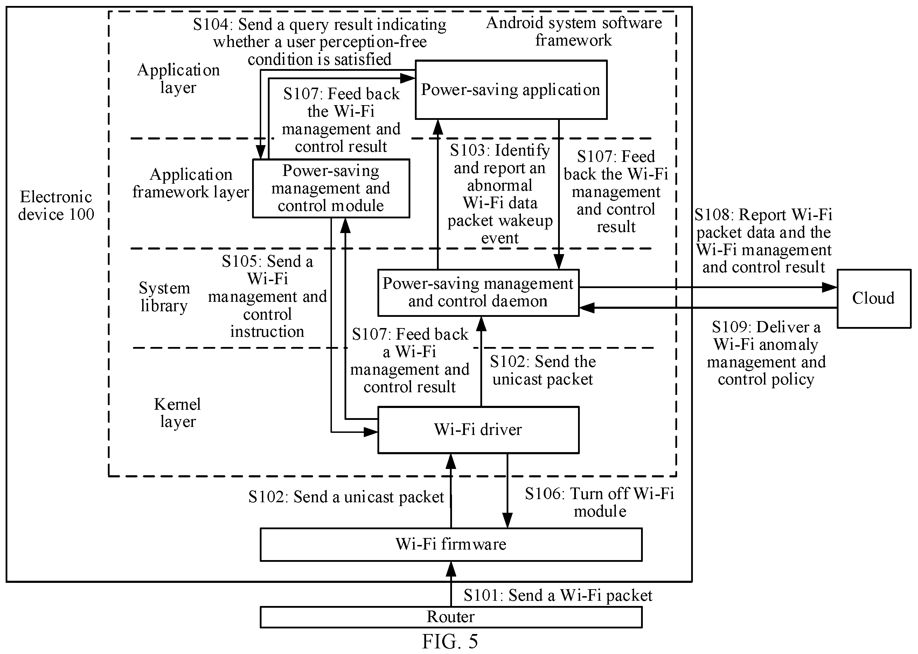

FIG. 5 is a schematic diagram of interaction between modules. Refer to FIG. 5. A procedure of the method for reducing power consumption provided in embodiments of this application specifically includes:
S101: A router sends a Wi-Fi packet to an electronic device.

The Wi-Fi packet (or referred to as a Wi-Fi data packet) includes but is not limited to a unicast packet, a multicast packet, a broadcast packet, and the like. A packet type (or referred to as a data packet type) of the Wi-Fi packet includes but is not limited to an ICMP packet, an ICMPv6 (Internet Control Message Protocol version 6, Internet control message protocol version 6), an ARP (Address Resolution Protocol, address resolution protocol) packet, a UDP (User Datagram Protocol, user datagram protocol) packet, a TCP (Transmission Control Protocol, transmission control protocol) packet, an unknown-type packet, and the like.

The unicast packet is a packet transferred between a transmitter end and a receiver in unicast communication. The unicast communication is point-to-point communication between two physical points, and both a transmitter and a receiver are uniquely determined. The transmitter and the receiver are configured with unicast addresses. For example, in an IPv4 network, IP addresses from 0.0.0.0 to 223.255.255.255 are unicast addresses.

The multicast packet is a packet transferred between a transmitter end and a receiver in multicast communication. The multicast communication means sending data to a plurality of receivers efficiently at the same time by using a multicast address.

The broadcast packet is a packet transferred between a transmitter end and a receiver in broadcast communication. The broadcast communication means sending data to each receiver on a local subnet efficiently at the same time by using a broadcast address.

The method for reducing power consumption provided in embodiments of this application is applied to an electronic device in a screen-off standby state (which may be referred to as a standby state).

S102: Wi-Fi firmware sends the received unicast packet to a power-saving management and control daemon via a Wi-Fi driver.

In the screen-off standby state, the router sends the Wi-Fi packet to the Wi-Fi firmware of the electronic device. The Wi-Fi firmware parses a destination address of the Wi-Fi packet to determine whether the Wi-Fi packet is a unicast packet, a multicast packet, or a broadcast packet.

In this embodiment of this application, it is assumed that an AP of the electronic device does not have a broadcast lock. In this case, in the screen-off standby state, the Wi-Fi firmware of the electronic device filters out a multicast packet and a broadcast packet, and only wakes up a system of the electronic device to perform packet reception processing when a unicast packet is received.

The Wi-Fi firmware may send the received unicast packet to the Wi-Fi driver, and the Wi-Fi driver then sends the unicast packet to the power-saving management and control daemon.

In an optional implementation, after receiving the unicast message, the Wi-Fi firmware parses a packet header to determine a packet type, such as an ICMP packet, an ICMPv6 packet, an ARP packet, a UDP packet, a TCP packet, and an unknown-type packet, and sends both the packet type and the received unicast packet to the Wi-Fi driver. The Wi-Fi driver then sends the unicast packet and the packet type of the unicast packet to the power-saving management and control daemon.

In another optional implementation, after receiving the unicast packet, the Wi-Fi firmware sends the received unicast packet to the Wi-Fi driver, and the Wi-Fi driver sends the unicast packet to the power-saving management and control daemon. The power-saving management and control daemon parses the packet to determine a packet type of the packet, such as an ICMP packet, an ICMPv6 packet, an ARP packet, a UDP packet, a TCP packet, and an unknown-type packet.

After receiving the unicast packet, the Wi-Fi driver may parse and process the unicast packet. For a parsing and processing procedure of the Wi-Fi driver on the unicast packet, refer to conventional technologies. Details are not described herein again.

S103: If identifying, based on the received Wi-Fi packet, that there is an abnormal Wi-Fi packet wakeup event currently, the power-saving management and control daemon reports the abnormal Wi-Fi packet wakeup event to the power-saving application.

The abnormal Wi-Fi packet wakeup event means that the Wi-Fi packet frequently wakes up the electronic device. In addition, the Wi-Fi packet that frequently wakes up the electronic devices do not have any specific service for the electronic devices and is meaningless for a user. In this embodiment of this application, the Wi-Fi packet may be referred to as a controllable Wi-Fi packet, and another Wi-Fi packet is an uncontrollable Wi-Fi packet.

The power-saving management and control daemon may determine, based on the packet type of the Wi-Fi packet, whether the received Wi-Fi packet is a Wi-Fi packet that needs to be controlled.

A common Wi-Fi packet may roughly include: a pure data packet with a normal service (for example, a data packet corresponding to an application service in an application such as WeChat and QQ), a meaningless junk packet, a UDP packet sent to a specified port, a data packet determining a communication state of an electronic device, a data packet without a specific service, and the like.

The UDP packet sent to a specified port may not be a packet sent to a listening port of the electronic device. After the electronic device system is waked up by the data packet without a specific service, the electronic device may not perform any actual service.

When determining a communication state of the electronic device, a third-party electronic device or the router sends a unicast packet such as an ICMP packet to the electronic device, that is, pings the electronic device. The ICMP packet may indicate one or more of information, for example, whether a network is connected, whether a host is accessible, and whether the router is available. However, for some reasons, the third-party electronic device or the router may frequently send the unicast packet such as the ICMP packet to the electronic device, in other words, frequently pings the electronic device. In an example in which the router frequency pings a mobile phone, a Wi-Fi module of the mobile phone is waked up frequently, resulting in high power consumption.

In this case, the power-saving management and control daemon may determine, based on the packet type of the received Wi-Fi packet, whether the Wi-Fi packet is a controllable Wi-Fi packet, and then determine, based on a frequency of the controllable Wi-Fi packet, whether there is currently an abnormal Wi-Fi packet wakeup event.

As shown in Table 1, an ICMP REQUEST packet, an ICMP RESPONSE packet, an ICMPV6 RA (Router Advertisement, router advertisement) packet, and an unknown-type packet may be used as controllable Wi-Fi packets. An IPV4 UDP Packet packet and an IPV6 UDP Packet packet may be used as packets that can be controlled in a targeted manner. An ICMPV6 NS (Neighbor Solicitation, neighbor solicitation) packet, an IPV6 TCP Packet packet, an IPV4 TCP Packet packet, an ARP REQUEST packet, and an ARP RESPONSE packet may be used as uncontrollable Wi-Fi packets.

For a packet that can be controlled in a targeted manner, the power-saving management and control daemon may determine, based on a port state of a destination port of the packet, whether the packet is a controllable packet or an uncontrollable packet. For example, when the power-saving management and control daemon receives the IPV4 UDP Packet packet or the IPV6 UDP Packet packet, if the state of the destination port of the IPV4 UDP Packet packet or the IPV6 UDP Packet packet is a non-listening (listening) state, for example, an established state, a closing state, or a time_wait state, then the IPV4 UDP Packet packet or the IPV6 UDP Packet packet is a controllable Wi-Fi packet; and if the state of the destination port of the IPV4 UDP Packet packet or the IPV6 UDP Packet packet is a (listening) state, then the IPV4 UDP Packet packet or the IPV6 UDP Packet packet is an uncontrollable Wi-Fi packet.

**Table 1**

| Data packet type | Function description | Controllable or not |
|---|---|---|
| ICMP REQUEST | Determine a state of a mobile terminal by a third-party device | Controllable |
| ICMP RESPONSE | | |
| ICMPV6 RA | | |
| IPV4 UDP | Data packet | Controlled in a target manner |
| IPV6 UDP | | |
| ICMPV6 NS | Address resolution protocol packet | Uncontrollable |
| IPV6 TCP | Data packet | |
| IPV4 TCP | | |
| ARP REQUEST | Address resolution protocol packet | |
| ARP RESPONSE | | |
| Unknown | Unknown | Controllable |

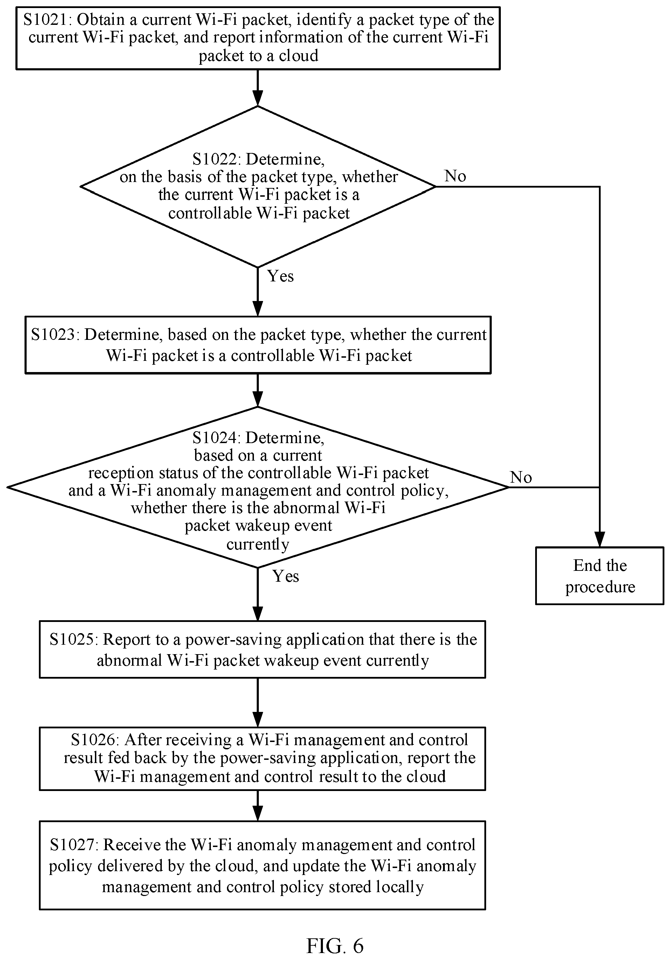

As shown in FIG. 6, a procedure in which the power-saving management and control daemon identifies whether there is an abnormal Wi-Fi packet wakeup event currently specifically includes:
S1021: The power-saving management and control daemon obtains a current Wi-Fi packet, identifies a packet type of the current Wi-Fi packet, and reports information of the current Wi-Fi packet to a cloud.

The current Wi-Fi packet is a Wi-Fi packet that is most recently received by the power-saving management and control daemon.

A packet type of the current Wi-Fi packet may be reported by the Wi-Fi driver or parsed by the power-saving management and control daemon. This is not limited in this embodiment of this application.

Regardless of whether the current Wi-Fi packet is a controllable Wi-Fi packet, the power-saving management and control daemon may report the information of the current Wi-Fi packet to the cloud, so that the cloud collects a condition of a Wi-Fi packet received by the electronic device in the standby state. For example, the information of the Wi-Fi packet reported to the cloud by the power-saving management and control daemon may include but is not limited to a packet type, reception time, and the like of the Wi-Fi packet.

S1022: The power-saving management and control daemon determines, based on the packet type, whether the current Wi-Fi packet is a controllable Wi-Fi packet. If the current Wi-Fi packet is a controllable Wi-Fi packet, S1023 is performed, and if the current Wi-Fi packet is an uncontrollable Wi-Fi packet, the procedure ends.

Refer to FIG. 6. The power-saving management and control daemon determines, based on the packet type, whether the current Wi-Fi packet is a controllable Wi-Fi packet. If determining, based on the packet type, that the current Wi-Fi packet is a Wi-Fi packet (such as an IPV4 UDP Packet packet or an IPV6 UDP Packet packet) that can be controlled in a targeted manner, the power-saving management and control daemon further determines, based on whether a destination port of the current Wi-Fi packet is in a listening state, whether the current Wi-Fi packet is a controllable Wi-Fi packet or an uncontrollable Wi-Fi packet.

S1023: The power-saving management and control daemon starts a procedure for identifying the abnormal Wi-Fi packet wakeup event.

When the current Wi-Fi packet is a controllable Wi-Fi packet, the power-saving management and control daemon starts the procedure for identifying the abnormal Wi-Fi packet wakeup event. When the current Wi-Fi packet is an uncontrollable Wi-Fi packet, the power-saving management and control daemon does not start the procedure for identifying the abnormal Wi-Fi packet wakeup event, and the procedure ends.

The abnormal Wi-Fi packet wakeup event means that the Wi-Fi packet frequently wakes up the electronic device when the electronic device is in the standby state, and the electronic device does not perform a specific service after receiving the Wi-Fi packet. The Wi-Fi packet is meaningless for the user.

S 1024: The power-saving management and control daemon determines, based on a current reception status of the controllable Wi-Fi packet and a Wi-Fi anomaly management and control policy, whether there is the abnormal Wi-Fi packet wakeup event currently. If there is the abnormal Wi-Fi packet wakeup event, S1025 is performed, and there is no abnormal Wi-Fi packet wakeup event, the procedure ends.

In this embodiment of this application, the power-saving management and control daemon determines, based on the current reception status of the controllable Wi-Fi packet and the Wi-Fi anomaly management and control policy, whether there is the abnormal Wi-Fi packet wakeup event currently. In other words, if the current reception status of the controllable Wi-Fi packet satisfies the Wi-Fi anomaly management and control policy, the power-saving management and control daemon determines that there is the abnormal Wi-Fi packet wakeup event currently.

The current reception status of the controllable Wi-Fi packet is a reception status of the controllable Wi-Fi packet in a recent period of time.

For example, a reception status may be represented by a reception frequency and reception duration. Correspondingly, the Wi-Fi anomaly management and control policy may be that the reception frequency reaches a first threshold (for example, twice per minute), and the reception duration reaches a second threshold (for example, ten minutes).

In this case, if determining, based on the current reception status of the controllable Wi-Fi packet, that the current reception frequency of the controllable Wi-Fi packet reaches the first threshold and the reception duration reaches the second threshold, then the power-saving management and control daemon determines that there is the abnormal Wi-Fi packet wakeup event in the electronic device currently, and Wi-Fi anomaly management and control needs to be performed, to reduce power consumption of the device.

For another example, the reception status may be represented by the reception frequency and a total quantity of controllable Wi-Fi packets received in a recent period of time. Correspondingly, the Wi-Fi anomaly management and control policy may be that the reception frequency reaches a first threshold (for example, twice per minute), and the total quantity of controllable Wi-Fi packets received in a recent period of time (for example, the last ten minutes) reaches a third threshold (for example, 30).

In this case, if determining, based on the current reception status of the controllable Wi-Fi packet, that the current reception frequency of the controllable Wi-Fi packet reaches the first threshold and the total quantity of controllable Wi-Fi packets received in a recent period of time reaches the third threshold, then the power-saving management and control daemon determines that there is the abnormal Wi-Fi packet wakeup event in the electronic device currently, and Wi-Fi anomaly management and control needs to be performed, to reduce power consumption of the device.

The current reception status of the controllable Wi-Fi packet may alternatively be represented in another form, and a corresponding Wi-Fi anomaly management and control policy may be adaptively set. This is not limited in this embodiment of this application.

S1025: The power-saving management and control daemon reports to the power-saving application that there is the abnormal Wi-Fi packet wakeup event currently.

When identifying that there is the abnormal Wi-Fi packet wakeup event in the electronic device currently, the power-saving management and control daemon reports, to the power-saving application, that there is the abnormal Wi-Fi packet wakeup event currently, to trigger the Wi-Fi anomaly management and control by using the power-saving application.

S1026: After receiving a Wi-Fi management and control result fed back by the power-saving application, the power-saving management and control daemon reports the Wi-Fi management and control result to the cloud.

In this embodiment of this application, after triggering the Wi-Fi anomaly management and control to enable the Wi-Fi module (the Wi-Fi chip) to perform a power off operation, the power-saving application may further feed back the Wi-Fi management and control result to the power-saving management and control daemon. For example, the Wi-Fi management and control result may include but is not limited to whether the Wi-Fi management and control is successful (to be specific, whether the Wi-Fi module is powered off), Wi-Fi management and control time, and the like.

Furthermore, the power-saving management and control daemon may report the Wi-Fi management and control result to the cloud.

S1027: The power-saving management and control daemon receives the Wi-Fi anomaly management and control policy delivered by the cloud, and updates a Wi-Fi anomaly management and control policy stored locally.

The cloud receives a large quantity of Wi-Fi packet information and Wi-Fi management and control results reported by the electronic device, and analyzes, based on the data, an effect of the Wi-Fi management and control of the electronic device based on the current Wi-Fi anomaly management and control policy, to determine whether frequent wakeup of the electronic device by the Wi-Fi packet in the standby state can be effectively reduced. In this case, the cloud may perform big data learning based on the large quantity of the Wi-Fi packet information and Wi-Fi management and control results reported by the electronic device, to update the Wi-Fi anomaly management and control policy and adjust the thresholds related to the Wi-Fi anomaly management and control policy. The cloud may deliver an adjusted Wi-Fi anomaly management and control policy to each electronic device regularly or irregularly.

In this way, the power-saving management and control daemon of the electronic device receives the Wi-Fi anomaly management and control policy delivered by the cloud, and may update the locally stored Wi-Fi anomaly management and control policy to perform, based on an updated Wi-Fi anomaly management and control policy, the procedure for identifying the abnormal Wi-Fi packet wakeup event, to improve accuracy of the Wi-Fi management and control and reduce frequent wakeup of the electronic device by the Wi-Fi packet in the standby state.

S104: When the abnormal Wi-Fi data packet wakeup event is received, the power-saving application queries whether a user perception-free condition is currently satisfies, and sends a query result to a power-saving management and control module.

The user perception-free condition means that the Wi-Fi management and control is not perceived by the user. For example, the user perception-free condition may be specifically that both a Wi-Fi function and a cellular data function of the electronic device are enabled, and there is no user-perceptible service in the electronic device currently, such as a playback service, a download service, and a navigation service.

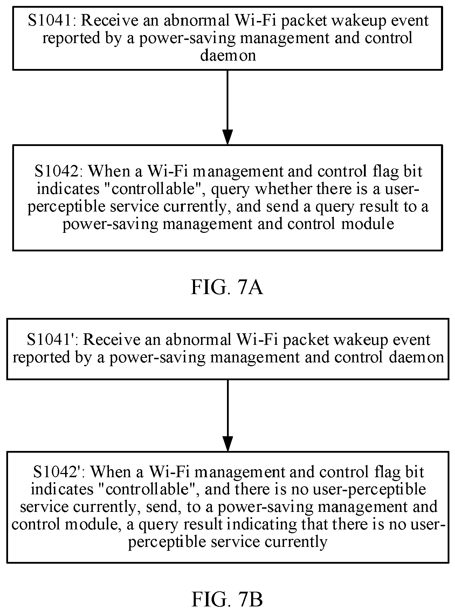

In an optional implementation, as shown in FIG. 7A, S104 may be specifically S1041 and S1042.

S1041: The power-saving application receives the abnormal Wi-Fi packet wakeup event reported by the power-saving management and control daemon.

S1042: When a Wi-Fi management and control flag bit indicates that the Wi-Fi module is controllable, the power-saving application queries whether there is a user-perceptible service currently, and sends a query result to the power-saving management and control module.

A value of the Wi-Fi management and control flag bit indicates whether the Wi-Fi module of the current electronic device is controllable. For example, the value of the Wi-Fi management and control flag bit being 1 indicates that the Wi-Fi module of the current electronic device is controllable, and the value of the Wi-Fi management and control flag bit being 0 indicates that the Wi-Fi module of the current electronic device is uncontrollable.

In this embodiment of this application, if the value of the Wi-Fi management and control flag bit indicates that the Wi-Fi module is controllable, and there is no user-perceptible service in the electronic device currently, it may be determined that the electronic device currently satisfies the user perception-free condition.

In this embodiment of this application, if the value of the Wi-Fi management and control flag bit indicates that the Wi-Fi module is uncontrollable, and there is a user-perceptible service in the electronic device currently, it may be determined that the electronic device currently does not satisfy the user perception-free condition.

In this case, when the Wi-Fi management and control flag bit indicates that the Wi-Fi module is controllable, the power-saving application may query whether there is a user-perceptible service currently, and send the query result to the power-saving management and control module, so that the power-saving management and control module can send a Wi-Fi management and control instruction to the Wi-Fi driver when the query result indicates that there is no user-perceptible service in the electronic device currently.

In this embodiment of this application, the power-saving application may set the value of the Wi-Fi management and control flag bit based on an operating condition of the electronic device.

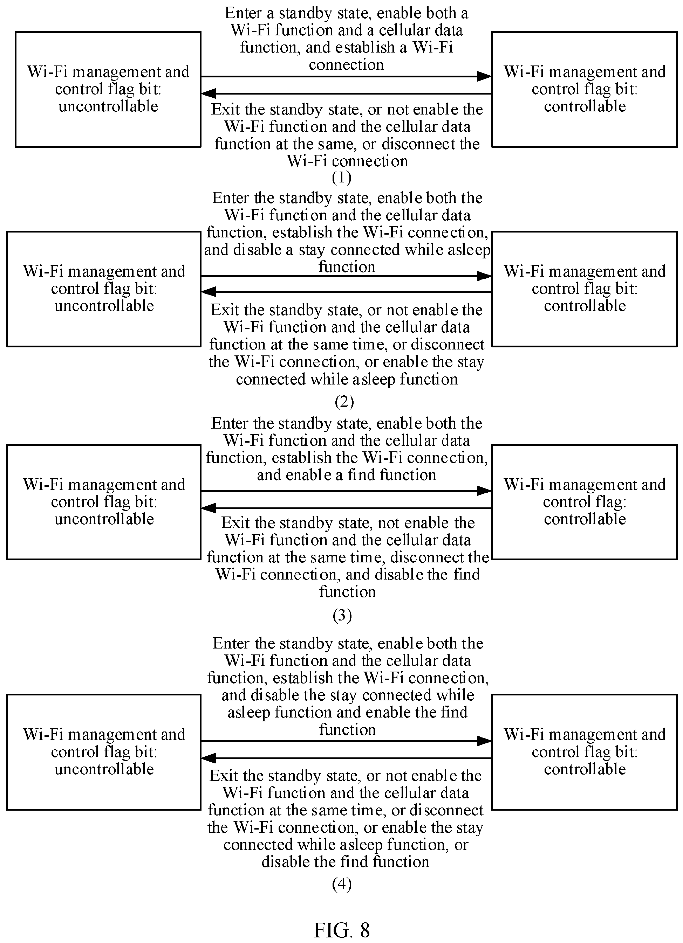

In an example, as shown in (1) in FIG. 8, when the power-saving application detects that the electronic device enters the standby state, the electronic device enables both a Wi-Fi data communication function and a cellular data communication function, and the electronic device establishes a Wi-Fi connection, the power-saving application may adjust the value of the Wi-Fi management and control flag bit from "the Wi-Fi module is uncontrollable" to "the Wi-Fi module is controllable". When the power-saving application detects that the electronic device exits the standby state, or the electronic device does not enable the Wi-Fi function and the cellular data function at the same time, or the electronic device disconnects the Wi-Fi connection, the power-saving application may adjust the value of the Wi-Fi management and control flag bit from "the Wi-Fi module is controllable" to "the Wi-Fi module is uncontrollable".

The user may enable or disable the Wi-Fi communication function and the cellular data communication function in a settings application of the electronic device (such as a mobile phone). After the electronic device enables the Wi-Fi communication function, the electronic device may search for nearby Wi-Fi networks, and join a corresponding Wi-Fi network in response to a relevant use operation (for example, entering a password), to establish a Wi-Fi connection. The above-mentioned electronic device establishing a Wi-Fi connection means that the electronic device successfully joins a Wi-Fi network. When the electronic device enables the cellular data communication function, the electronic device may perform data communication based on a data traffic of a SIM card installed in the electronic device. If the electronic device enables both the Wi-Fi data communication function and the cellular data communication function, and the electronic device establishes a Wi-Fi connection, the electronic device gives priority to using the Wi-Fi connection for data communication. If an anomaly occurs in a Wi-Fi network to which the electronic device accesses, the Wi-Fi connection of the electronic device is disconnected.

The standby state is a state in which the electronic device is turned on but does not perform any substantial work (to be specific, does not perform various operations on files and programs). This may be understood as a power-on state during which no operation is performed. The power-saving application may detect whether the electronic device enters the standby state, for example, may determine, based on a preset algorithm, whether the electronic device enters the standby state.

In an optional implementation, the power-saving application may alternatively determine, based on standby duration of the electronic device, whether the electronic device enters a long-term standby state. For example, if the duration of the electronic device being in the standby state reaches a preset threshold, the power-saving application determines that the electronic device enters the long-term standby state.

In another optional implementation, the power-saving application may alternatively determine, based on time of the electronic device being in the standby state, whether the electronic device enters a night standby state. For example, if the time of the electronic device being in the standby state falls within a night time period (such as 0:00 to 6:00 or 23:00 to 5:00), the power-saving application determines that the electronic device enters the night standby state.

In still another optional implementation, the power-saving application may alternatively determine, based on standby duration of the electronic device and time of the electronic device being in the standby state, whether the electronic device enters a night long-term standby state. For example, if the time of the electronic device being in the standby state falls within a night time period (such as 0:00 to 6:00 or 23:00 to 5:00), and duration of the electronic device being in the standby state reaches a preset threshold, the power-saving application determines that the electronic device enters the night long-term standby state.

Optionally, when the power-saving application detects that the electronic device enters a long-term standby state (or a night standby state or a night long-term standby state), the electronic device enables both the Wi-Fi data communication function and the cellular data communication function, and the electronic device establishes a Wi-Fi connection, the power-saving application may adjust the value of the Wi-Fi management and control flag bit from "the Wi-Fi module is uncontrollable" to "the Wi-Fi module is controllable". When the power-saving application detects that the electronic device exits the long-term standby state (or the night standby state or the night long-term standby state), or the electronic device does not enable the Wi-Fi function and the cellular data function at the same time, or the electronic device disconnects the Wi-Fi connection, the power-saving application may adjust the value of the Wi-Fi management and control flag bit from "the Wi-Fi module is controllable" to "the Wi-Fi module is uncontrollable".

In an example, as shown in (2) in FIG. 8, when the power-saving application detects that the electronic device enters the standby state, the electronic device enables both a Wi-Fi data communication function and a cellular data communication function, the electronic device establishes a Wi-Fi connection, and the electronic device disables a stay connected while asleep function, the power-saving application may adjust the value of the Wi-Fi management and control flag bit from "the Wi-Fi module is uncontrollable" to "the Wi-Fi module is controllable". When the power-saving application detects that the electronic device exits the standby state, or the electronic device does not enable the Wi-Fi function and the cellular data function at the same time, or the electronic device disconnects the Wi-Fi connection, or the electronic device enables the stay connected while asleep function, the power-saving application may adjust the value of the Wi-Fi management and control flag bit from "the Wi-Fi module is controllable" to "the Wi-Fi module is uncontrollable".

The stay connected while asleep function means that the electronic device always maintains a network connection status in the standby state. The user may enable or disable the stay connected while asleep function in the settings application. In this case, if the user enables the stay connected while asleep function of the electronic device, and hopes that the electronic device always maintains a network connection status in the standby state, then in this embodiment of this application, to not go against the user's will, a user enabling the stay connected while asleep function is used as one of the conditions under which the Wi-Fi module is uncontrollable.

Similarly, when the power-saving application detects that the electronic device enters a long-term standby state (or a night standby state or a night long-term standby state), the electronic device enables both the Wi-Fi data communication function and the cellular data communication function, the electronic device establishes a Wi-Fi connection, and the electronic device disables the stay connected while asleep function, the power-saving application may adjust the value of the Wi-Fi management and control flag bit from "the Wi-Fi module is uncontrollable" to "the Wi-Fi module is controllable". When the power-saving application detects that the electronic device exits the long-term standby state (or the night standby state or the night long-term standby state), or the electronic device does not enable the Wi-Fi function and the cellular data function at the same time, or the electronic device disconnects the Wi-Fi connection, or the electronic device enables the stay connected while asleep function, the power-saving application may adjust the value of the Wi-Fi management and control flag bit from "the Wi-Fi module is controllable" to "the Wi-Fi module is uncontrollable".

In this way, when the stay connected while asleep function is enabled, the value of the Wi-Fi management and control flag bit is set to "the Wi-Fi module is uncontrollable". The Wi-Fi module is not controlled to power off, and this goes against the user's will.

In an example, as shown in (3) in FIG. 8, when the power-saving application detects that the electronic device enters the standby state, the electronic device enables both a Wi-Fi data communication function and a cellular data communication function, the electronic device establishes a Wi-Fi connection, and the electronic device enables a find function (such as a find device function), the power-saving application may adjust the value of the Wi-Fi management and control flag bit from "the Wi-Fi module is uncontrollable" to "the Wi-Fi module is controllable". When the power-saving application detects that the electronic device exits the standby state, or the electronic device does not enable the Wi-Fi function and the cellular data function at the same time, or the electronic device disconnects the Wi-Fi connection, or the electronic device disables the find function, the power-saving application may adjust the value of the Wi-Fi management and control flag bit from "the Wi-Fi module is controllable" to "the Wi-Fi module is uncontrollable".

The find function of electronic devices is an anti-theft function of electronic device. Using the find device function as an example, the find device function may help users find their mobile phones. If a mobile phone of a user is accidentally lost, the find device function may locate, lock, erase data, and play a sound operation on the mobile phone.

In an application scenario, if the user disables the find function of the electronic device, when the electronic device enters the standby state (or the long-term standby state or the night standby state or the night long-term standby state), the Wi-Fi module of the electronic device is automatically turned off, for example, the Wi-Fi chip is powered off. In this case, to enable this embodiment of this application to be applicable to this scenario, the user disabling the find function of the electronic device is used as one of conditions that the Wi-Fi module is uncontrollable.

In this way, when the find function of the electronic device is disabled, the value of the Wi-Fi management and control flag bit is set to "the Wi-Fi module is uncontrollable". The Wi-Fi module is powered off, and does not need to be controlled based on the solution provided in this embodiment of this application. In fact, when the find function of the electronic device is disabled, and the electronic device is in the standby state, the electronic device is frequently waked up by the Wi-Fi data packet.

Optionally, when the power-saving application detects that the electronic device enters a long-term standby state (or a night standby state or a night long-term standby state), the electronic device enables both the Wi-Fi data communication function and the cellular data communication function, the electronic device establishes a Wi-Fi connection, and the electronic device enables the find function (such as the find device function), the power-saving application may adjust the value of the Wi-Fi management and control flag bit from "the Wi-Fi module is uncontrollable" to "the Wi-Fi module is controllable". When the power-saving application detects that the electronic device exits the long-term standby state (or the night standby state or the night long-term standby state), or the electronic device does not enable the Wi-Fi function and the cellular data function at the same time, or the electronic device disconnects the Wi-Fi connection, or the electronic device disables the find function, the power-saving application may adjust the value of the Wi-Fi management and control flag bit from "the Wi-Fi module is controllable" to "the Wi-Fi module is uncontrollable".

In an example, as shown in (4) in FIG. 8, when the power-saving application detects that the electronic device enters the standby state, the electronic device enables both a Wi-Fi data communication function and a cellular data communication function, the electronic device establishes a Wi-Fi connection, and the electronic device disables a stay connected while asleep function and enables a find function (such as a find device function), the power-saving application may adjust the value of the Wi-Fi management and control flag bit from "the Wi-Fi module is uncontrollable" to "the Wi-Fi module is controllable". When the power-saving application detects that the electronic device exits the standby state, or the electronic device does not enable the Wi-Fi function and the cellular data function at the same time, or the electronic device disconnects the Wi-Fi connection, or the electronic device enables the stay connected while asleep function, or the electronic device disables the find function, the power-saving application may adjust the value of the Wi-Fi management and control flag bit from "the Wi-Fi module is controllable" to "the Wi-Fi module is uncontrollable".

Optionally, when the power-saving application detects that the electronic device enters a long-term standby state (or a night standby state or a night long-term standby state), the electronic device enables both the Wi-Fi data communication function and the cellular data communication function, the electronic device establishes a Wi-Fi connection, and the electronic device disables the stay connected while asleep function and enables the find function (such as the find device function), the power-saving application may adjust the value of the Wi-Fi management and control flag bit from "the Wi-Fi module is uncontrollable" to "the Wi-Fi module is controllable". When the power-saving application detects that the electronic device exits the standby state, or the electronic device does not enable the Wi-Fi function and the cellular data function at the same time, or the electronic device disconnects the Wi-Fi connection, or the electronic device enables the stay connected while asleep function, or the electronic device disables the find function, the power-saving application may adjust the value of the Wi-Fi management and control flag bit from "the Wi-Fi module is controllable" to "the Wi-Fi module is uncontrollable".

In an optional implementation, as shown in FIG. 7B, S104 may be specifically S1041' and S1042'.

S1041': The power-saving application receives the abnormal Wi-Fi packet wakeup event reported by the power-saving management and control daemon.

S1042': When the Wi-Fi management and control flag bit indicates that the Wi-Fi module is controllable and there is no user-perceptible service currently, the power-saving application sends, to the power-saving management and control module, a query result indicating that there is no user-perceptible service currently.

In this implementation, only when the Wi-Fi management and control flag bit indicates that the Wi-Fi module is controllable and there is no user-perceptible service in the electronic device currently, the power-saving application sends, to the power-saving management and control module, the query result indicating that there is no user-perceptible service currently. When the Wi-Fi management and control flag bit indicates that the Wi-Fi module is uncontrollable, the power-saving application may not send, to the power-saving management and control module, the query result indicating whether there is a user-perceptible service currently.

Optionally, when the Wi-Fi management and control flag bit indicates that the Wi-Fi module is controllable, only when it is found that there is no user-perceptible service currently, the power-saving application sends, to the power-saving management and control module, the query result indicating that there is no user-perceptible service currently. When the Wi-Fi management and control flag bit indicates that the Wi-Fi module is controllable, and it is found that there is a user-perceptible service currently, the power-saving application may not send, to the power-saving management and control module, the query result indicating whether there is a user-perceptible service currently.

In this way, when the power-saving management and control module does not receive the query result that is sent by the power-saving application and that indicates whether there is a user-perceptible service at currently, or does not receive the query result indicating whether a user perception-free condition is currently satisfied, there is no need to further perform an operation of whether to perform management and control on the Wi-Fi module.

After the power-saving application receives the abnormal Wi-Fi packet wakeup event reported by the power-saving management and control daemon, if the user perception-free condition is not satisfied currently, or the Wi-Fi management and control flag bit indicates that the Wi-Fi module is uncontrollable, or there is a user-perceptible service currently, or the like, when the power-saving application does not send, to the power-saving management and control module, any information for indicating Wi-Fi control, the power-saving application may feed back information that the Wi-Fi control cannot be performed currently to the power-saving management and control daemon.

In another implementation, after receiving the abnormal Wi-Fi packet wakeup event reported by the power-saving management and control daemon, if a user perception-free condition is satisfied currently, the power-saving application may directly send a Wi-Fi management and control instruction to the power-saving management and control module, so that the power-saving management and control module can send the Wi-Fi management and control instruction to the Wi-Fi driver. Alternatively, after receiving the abnormal Wi-Fi packet wakeup event reported by the power-saving management and control daemon, if the Wi-Fi management and control flag bit indicates that the Wi-Fi module is controllable and there is no user-perceptible service currently, the power-saving application may directly send a Wi-Fi management and control instruction to the power-saving management and control module, so that the power-saving management and control module can send the Wi-Fi management and control instruction to the Wi-Fi driver.

S105: When the query result indicates that the user perception-free condition is satisfied currently, the power-saving management and control module sends the Wi-Fi management and control instruction to the Wi-Fi driver.

If the power-saving management and control module receives information that is sent by the power-saving application and that indicates that the user perception-free condition is satisfied currently or that there is no user-perceptible service currently, the power-saving management and control module may send the Wi-Fi management and control instruction to the Wi-Fi driver. The Wi-Fi management and control instruction instructs the Wi-Fi driver to power off the Wi-Fi module (the Wi-Fi chip).

If the power-saving management and control module receives the Wi-Fi management and control instruction sent by the power-saving application, the Wi-Fi management and control instruction may be sent to the Wi-Fi driver, so that the Wi-Fi module is powered off by using the Wi-Fi driver.

S106: The Wi-Fi driver performs an operation of turning off the Wi-Fi module based on the Wi-Fi management and control instruction.

After the Wi-Fi driver turns off the Wi-Fi module based on the Wi-Fi management and control instruction, the Wi-Fi module is powered off and a process corresponding to the Wi-Fi module is destroyed. At the same time, in a settings application of the electronic device, a switch control of a Wi-Fi communication function is in an OFF state.

S107: The Wi-Fi driver feeds back the Wi-Fi management and control result to the power-saving management and control daemon via the power-saving management and control module and the power-saving application.

After performing the operation of turning off the Wi-Fi module based on the Wi-Fi management and control instruction, the Wi-Fi driver may further feed back the Wi-Fi management and control result to the power-saving management and control module, and then feed back the Wi-Fi management and control result to the power-saving application by using the power-saving management and control module. In this way, the power-saving application can send, to the power-saving management and control daemon, the Wi-Fi management and control result as feedback information of the abnormal Wi-Fi packet wakeup event.

In another implementation, the Wi-Fi driver may alternatively send the Wi-Fi management and control result directly to the power-saving management and control daemon.

For example, the Wi-Fi management and control result may include but is not limited to whether the Wi-Fi management and control is successful (to be specific, whether the Wi-Fi module is powered off), Wi-Fi management and control time, and the like.

S108: The power-saving management and control daemon reports Wi-Fi packet data and the Wi-Fi management and control result to the cloud.

The power-saving management and control daemon reports the information of current Wi-Fi packet to the cloud, so that the cloud collects a condition of a Wi-Fi packet received by the electronic device in the standby state. For example, the information of the Wi-Fi packet reported to the cloud by the power-saving management and control daemon may include but is not limited to a packet type, reception time, and the like of the Wi-Fi packet.

The power-saving management and control daemon may further report a local Wi-Fi management and control result to the cloud, so that the cloud adjusts the Wi-Fi anomaly management and control policy based on big data.

S109: The cloud feeds back the Wi-Fi anomaly management and control policy to the electronic device, so that the power-saving management and control daemon updates the local Wi-Fi anomaly management and control policy.

The cloud may perform big data learning based on the large quantity of the Wi-Fi packet information and Wi-Fi management and control results reported by the electronic device, to update the Wi-Fi anomaly management and control policy and adjust the thresholds related to the Wi-Fi anomaly management and control policy. The cloud may deliver an adjusted Wi-Fi anomaly management and control policy to each electronic device regularly or irregularly.

After the Wi-Fi driver turns off the Wi-Fi module based on the Wi-Fi management and control instruction, the electronic device may further receive a packet by through network communication by using cellular data, and this does not affect a normal service of the user.

In this way, if the electronic device identifies an abnormal Wi-Fi packet wakeup event in the standby state, power consumption of the electronic device in the standby state can be effectively reduced by turning off the Wi-Fi module, thereby effectively reducing a standby current of the electronic device in a screen-off state.

Based on tests, before Wi-Fi management and control is performed on a mobile phone based on the technical solution provided in embodiments of this application, the mobile phone receives nearly 1,500 meaningless Wi-Fi downlink unicast packets (such as ICMP REQUEST data packets) in three hours of standby state, but there is no actual service on a mobile phone side, and the standby current reaches 58 mA. After the Wi-Fi management and control is performed on the mobile phone based on the technical solution provided in embodiments of this application, in other words, after the Wi-Fi module is turned off, a system of the mobile phone system is no longer waked up by the Wi-Fi data packet, and the standby current is reduced to 31 mA to obtain a current gain of more than 20 mA. It should be noted that the above-mentioned tested mobile phone is not in a charging state.

Based on the foregoing technical solution, the power-saving management and control daemon may always identify the abnormal Wi-Fi packet wakeup event, and may alternatively determine, based on the indication of the power-saving application, whether it is currently necessary to identify the abnormal Wi-Fi packet wakeup event.

For example, when detecting that the electronic device enters a standby state (a long-term standby state, a night standby state, or a night long-term standby state) and establishes a Wi-Fi connection, the power-saving application indicates the power-saving management and control daemon to identify the abnormal Wi-Fi packet wakeup event. When detecting that the electronic device exits the standby state (the long-term standby state, the night standby state, or the night long-term standby state) or the Wi-Fi connection is disconnected, the power-saving application indicates the power-saving management and control daemon to stop to identify the abnormal Wi-Fi packet wakeup event.

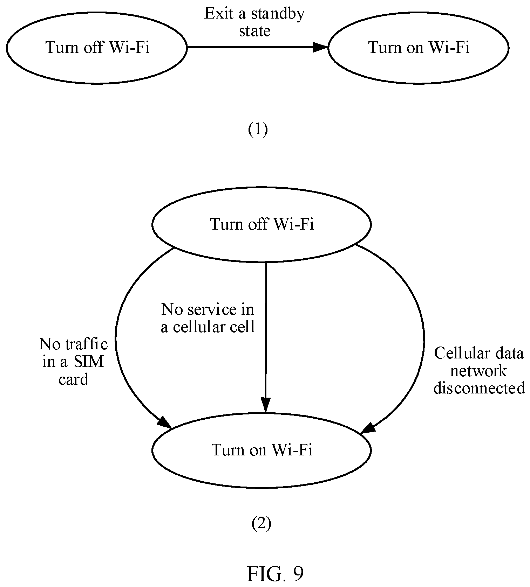

Further, refer to (1) in FIG. 9. After the Wi-Fi module of the electronic device is controlled to power off, if detecting that the electronic device exits the standby state (the long-term standby state, the night standby state, or the night long-term standby state), for example, the electronic device receives a screen-on operation (for example, clicking/tapping a power key or a screen, or lifting the electronic device) of a user, the power-saving application sends Wi-Fi restoring indication information to the power-saving management and control module. Then, the power-saving management and control module sends a Wi-Fi restoring instruction to the Wi-Fi driver based on the Wi-Fi restoring indication information. The Wi-Fi driver may control the Wi-Fi module (the Wi-Fi chip) to power on (for example, turn on a power supply and start) based on the Wi-Fi restoring instruction.

In this way, after power off management and control is performed on the Wi-Fi module, if the electronic device is used by the user, the electronic device may automatically restore running of the Wi-Fi module, without affecting use experience of the user.

In addition, after the Wi-Fi module of the electronic device is controlled to power off, the power-saving application may further monitor whether there is a preset cellular data network anomaly in the electronic device. If it is detected that there is a preset cellular data network anomaly in the electronic device, with reference to (2) in FIG. 9, the power-saving application may send the Wi-Fi restoring indication information to the power-saving management and control module to restore a Wi-Fi data communication function to avoid affecting user experience.

For example, after the Wi-Fi module of the electronic device is controlled to power off, if the power-saving application detects that a cellular data network of the electronic device is disconnected, which may affect a normal data service of the user, it is determined that there is a preset cellular data network anomaly in the electronic device. In this case, the power-saving application may send Wi-Fi restoring indication information to the power-saving management and control module, so that the power-saving management and control module sends a Wi-Fi restoring instruction to the Wi-Fi driver based on the Wi-Fi restoring indication information, and controls the Wi-Fi module (the Wi-Fi chip) to power on by using the Wi-Fi driver.

After the Wi-Fi driver controls the Wi-Fi module (the Wi-Fi chip) to power on, in a setting application of the electronic device, a switch control of a Wi-Fi communication function is in an ON state.

For another example, after the Wi-Fi module of the electronic device is controlled to power off, if the power-saving application detects that a traffic of a SIM card of the electronic device reaches a threshold or there is no remaining traffic, which may affect a normal data service of the user, it is determined that there is a preset cellular data network anomaly in the electronic device. In this case, the power-saving application may send Wi-Fi restoring indication information to the power-saving management and control module, so that the power-saving management and control module sends a Wi-Fi restoring instruction to the Wi-Fi driver based on the Wi-Fi restoring indication information, and controls the Wi-Fi module (the Wi-Fi chip) to power on by using the Wi-Fi driver.

For another example, after the Wi-Fi module of the electronic device is controlled to power off, if the power-saving application detects that there is no service (or referred to as no signal) in a cellular cell in which the electronic device is located, which may affect a normal data service of the user, it is determined that there is a preset cellular data network anomaly in the electronic device. In this case, the power-saving application may send Wi-Fi restoring indication information to the power-saving management and control module, so that the power-saving management and control module sends a Wi-Fi restoring instruction to the Wi-Fi driver based on the Wi-Fi restoring indication information, and controls the Wi-Fi module (the Wi-Fi chip) to power on by using the Wi-Fi driver.

In his way, the solution provided in this embodiment can also resolve, by restoring the Wi-Fi module, the cellular data network anomaly that occurs after the Wi-Fi module is controlled to power off, so as to avoid a negative impact on use experience of the user.

An embodiment further provides a computer storage medium. The computer storage medium stores computer instructions. When the computer instructions are run on an electronic device, the electronic device is enabled to perform steps of the foregoing related method to implement the method for reducing power consumption in the foregoing embodiment.

An embodiment further provides a computer program product. When the computer program product runs on a computer, the computer is enabled to perform the foregoing related steps to implement the method for reducing power consumption in the foregoing embodiment.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method for reducing power consumption in the foregoing method embodiment.

The electronic device (such as a mobile phone), the computer storage medium, the computer program product, or the chip provided in embodiments is configured to perform the corresponding method provided above. Therefore, for beneficial effects that can be achieved by the electronic device, the computer storage medium, the computer program product, or the chip, refer to beneficial effects of the corresponding method provided above. Details are not described herein again.

## Claims

1. A method for reducing power consumption, applied to an electronic device, wherein the electronic device comprises a Wi-Fi module and a mobile network module, and the method comprises:
obtaining a Wi-Fi packet that is received;
when the Wi-Fi packet is a target packet, identifying, based on a current reception status of the target packet, whether there is a target event, wherein the target packet is received by the electronic device in a standby state, and wherein the identifying, based on a current reception status of the target packet, whether there is a target event comprises:
determining, based on whether the current reception status of the target packet satisfies a preset Wi-Fi anomaly management and control policy, whether there is the target event;
wherein that the Wi-Fi packet is a target packet comprises:
when a packet type of the Wi-Fi packet is a first type, the Wi-Fi packet is the target packet, wherein the first type comprises: ICMP REQUEST, ICMP RESPONSE, and ICMPV6 RA;
when the packet type of the Wi-Fi packet is a second type, and a state of a destination port of the Wi-Fi packet is a non-listening state, the Wi-Fi packet is the target packet, wherein the second type comprises: IPV4 UDP and IPV6 UDP;
when the packet type of the Wi-Fi packet is an unknown type, the Wi-Fi packet is the target packet;
if there is the target event currently, turning off the Wi-Fi module when the electronic device satisfies a user perception-free condition, wherein that the electronic device satisfies a user perception-free condition comprises:
when a Wi-Fi management and control flag bit indicates that the Wi-Fi module is controllable, and there is no user-perceptible service in the electronic device, the electronic device satisfies the user perception-free condition;
wherein the method further comprises:
when the Wi-Fi management and control flag bit indicates that the Wi-Fi module is uncontrollable, if the electronic device enters the standby state, both a Wi-Fi communication function and a cellular data communication function are enabled, and a Wi-Fi communication connection is established, resetting the Wi-Fi management and control flag bit, so that the Wi-Fi management and control flag bit indicates that the Wi-Fi module is controllable; and
when the Wi-Fi management and control flag bit indicates that the Wi-Fi module is controllable, if the electronic device exits the standby state, or the Wi-Fi communication function and the cellular data communication function are not enabled at the same time, or the Wi-Fi communication connection is disconnected, resetting the Wi-Fi management and control flag bit, so that the Wi-Fi management and control flag bit indicates that the Wi-Fi module is uncontrollable.

2. The method according to claim 1, wherein the identifying, based on a current reception status of the target packet, whether there is a target event comprises:
if a reception frequency of the target packet reaches a first threshold and reception duration reaches a second threshold, determining that there is the target event.

3. The method according to claim 1, further comprising:
when the Wi-Fi management and control flag bit indicates that the Wi-Fi module is uncontrollable, if the electronic device enters the standby state, both the Wi-Fi communication function and the cellular data communication function are enabled, the Wi-Fi communication connection is established, and a first function is disabled, resetting the Wi-Fi management and control flag bit, so that the Wi-Fi management and control flag bit indicates that the Wi-Fi module is controllable; and
when the Wi-Fi management and control flag bit indicates that the Wi-Fi module is controllable, if the electronic device exits the standby state, or the Wi-Fi communication function and the cellular data communication function are not enabled at the same time, or the Wi-Fi communication connection is disconnected, or the first function is enabled, resetting the Wi-Fi management and control flag bit, so that the Wi-Fi management and control flag bit indicates that the Wi-Fi module is uncontrollable, wherein
the first function indicates that the electronic device maintains a network connection in the standby state.

4. The method according to claim 1, further comprising:
when the Wi-Fi management and control flag bit indicates that the Wi-Fi module is uncontrollable, if the electronic device enters the standby state, both the Wi-Fi communication function and the cellular data communication function are enabled, the Wi-Fi communication connection is established, and a second function is enabled, resetting the Wi-Fi management and control flag bit, so that the Wi-Fi management and control flag bit indicates that the Wi-Fi module is controllable; and
when the Wi-Fi management and control flag bit indicates that the Wi-Fi module is controllable, if the electronic device exits the standby state, or the Wi-Fi communication function and the cellular data communication function are not enabled at the same time, or the Wi-Fi communication connection is disconnected, or the second function is disabled, resetting the Wi-Fi management and control flag bit, so that the Wi-Fi management and control flag bit indicates that the Wi-Fi module is uncontrollable, wherein
when the second function is disabled, if the electronic device enters the standby state, the Wi-Fi module is turned off automatically.

5. The method according to claim 1, further comprising:
when the Wi-Fi management and control flag bit indicates that the Wi-Fi module is uncontrollable, if the electronic device enters the standby state, both the Wi-Fi communication function and the cellular data communication function are enabled, the Wi-Fi communication connection is established, a first function is disabled, and a second function is enabled, resetting the Wi-Fi management and control flag bit, so that the Wi-Fi management and control flag bit indicates that the Wi-Fi module is controllable; and
when the Wi-Fi management and control flag bit indicates that the Wi-Fi module is controllable, if the electronic device exits the standby state, or the Wi-Fi communication function and the cellular data communication function are not enabled at the same time, or the Wi-Fi communication connection is disconnected, or the first function is enabled, or the second function is disabled, resetting the Wi-Fi management and control flag bit, so that the Wi-Fi management and control flag bit indicates that the Wi-Fi module is uncontrollable, wherein
the first function indicates that the electronic device maintains a network connection in the standby state; and when the second function is disabled, if the electronic device enters the standby state, the Wi-Fi module is turned off automatically.

6. The method according to claim 1, wherein the identifying, based on a current reception status of the target packet, whether there is a target event comprises:
if the electronic device is in the standby state, identifying, based on the current reception status of the target packet, whether there is the target event.

7. The method according to claim 1, wherein after the turning off the Wi-Fi module, the method further comprises:
turning on the Wi-Fi module in response to a received screen-on operation;
or if it is detected that there is a preset cellular data network anomaly in the electronic device, turning on the Wi-Fi module.

8. The method according to claim 7, wherein the preset cellular data network anomaly comprises at least:
a cellular data network disconnection, a traffic of a SIM card reaching a threshold or no remaining traffic, and no service in a cellular cell in which the electronic device is located.

9. An electronic device (100), comprising:
one or more processors (110);
a memory (121); and
one or more computer programs, wherein the one or more computer programs are stored in the memory (121), and when the computer program is executed by the one or more processors (110), the electronic device (100) is enabled to perform the method for reducing power consumption according to any one of claims 1 to 8.

10. A computer-readable storage medium, comprising a computer program, wherein when the computer program runs on an electronic device (100), the electronic device (100) is enabled to perform the method for reducing power consumption according to any one of claims 1 to 8.

## Patentansprüche

1. Verfahren zur Reduzierung des Stromverbrauchs, angewendet auf eine elektronische Vorrichtung, wobei die elektronische Vorrichtung ein Wi-Fi-Modul und ein Mobilfunknetzmodul umfasst, und das Verfahren umfasst:
Erhalten eines empfangenen Wi-Fi-Pakets;
wenn das Wi-Fi-Paket ein Zielpaket ist, Identifizieren, basierend auf einem aktuellen Empfangsstatus des Zielpakets, ob ein Zielereignis vorliegt, wobei das Zielpaket durch die elektronische Vorrichtung in einem Standby-Zustand empfangen wird, und wobei das Identifizieren, basierend auf einem aktuellen Empfangsstatus des Zielpakets, ob ein Zielereignis vorliegt, umfasst:
Bestimmen, basierend darauf, ob der aktuelle Empfangsstatus des Zielpakets eine voreingestellte Wi-Fi-Anomalieverwaltungs- und -steuerungsrichtlinie erfüllt, ob das Zielereignis vorliegt;
wobei, dass das Wi-Fi-Paket ein Zielpaket ist, umfasst:
wenn ein Pakettyp des Wi-Fi-Pakets ein erster Typ ist, das Wi-Fi-Paket das Zielpaket ist, wobei der erste Typ umfasst: ICMP REQUEST, ICMP RESPONSE und ICMPV6 RA;
wenn der Pakettyp des Wi-Fi-Pakets ein zweiter Typ ist und ein Zustand eines Zielports des Wi-Fi-Pakets ein Nicht-Abhör-Zustand ist, das Wi-Fi-Paket das Zielpaket ist, wobei der zweite Typ umfasst: IPV4 UDP und IPV6 UDP;
wenn der Pakettyp des Wi-Fi-Pakets ein unbekannter Typ ist, das Wi-Fi-Paket das Zielpaket ist;
falls das Zielereignis aktuell vorliegt, Ausschalten des Wi-Fi-Moduls, wenn die elektronische Vorrichtung eine für den Benutzer unmerkliche Bedingung erfüllt, wobei, dass die elektronische Vorrichtung eine für den Benutzer unmerkliche Bedingung erfüllt, umfasst:
wenn ein Wi-Fi-Verwaltungs- und -steuerungs-Flag-Bit angibt, dass das Wi-Fi-Modul steuerbar ist, und kein nutzerwahrnehmbarer Dienst in der elektronischen Vorrichtung vorliegt, die elektronische Vorrichtung die für den Benutzer unmerkliche Bedingung erfüllt;
wobei das Verfahren ferner umfasst:
wenn das Wi-Fi-Verwaltungs- und -steuerungs-Flag-Bit angibt, dass das Wi-Fi-Modul unsteuerbar ist, falls die elektronische Vorrichtung in den Standby-Zustand eintritt, sowohl eine Wi-Fi-Kommunikationsfunktion als auch eine zellulare Datenkommunikationsfunktion aktiviert sind, und eine Wi-Fi-Kommunikationsverbindung aufgebaut ist, Zurücksetzen des Wi-Fi-Verwaltungs- und -steuerungs-Flag-Bits, so dass das Wi-Fi-Verwaltungs- und -steuerungs-Flag-Bit angibt, dass das Wi-Fi-Modul steuerbar ist; und
wenn das Wi-Fi-Verwaltungs- und -steuerungs-Flag-Bit angibt, dass das Wi-Fi-Modul steuerbar ist, falls die elektronische Vorrichtung den Standby-Zustand verlässt, oder die Wi-Fi-Kommunikationsfunktion und die zellulare Datenkommunikationsfunktion nicht gleichzeitig aktiviert sind, oder die Wi-Fi-Kommunikationsverbindung getrennt ist, Zurücksetzen des Wi-Fi-Verwaltungs- und -steuerungs-Flag-Bits, so dass das Wi-Fi-Verwaltungs- und -steuerungs-Flag-Bit angibt, dass das Wi-Fi-Modul unsteuerbar ist.

2. Verfahren nach Anspruch 1, wobei das Identifizieren, basierend auf einem aktuellen Empfangsstatus des Zielpakets, ob ein Zielereignis vorliegt, umfasst:
falls eine Empfangshäufigkeit des Zielpakets einen ersten Schwellenwert erreicht und eine Empfangsdauer einen zweiten Schwellenwert erreicht, Bestimmen, dass das Zielereignis vorliegt.

3. Verfahren nach Anspruch 1, ferner umfassend:
wenn das Wi-Fi-Verwaltungs- und -steuerungs-Flag-Bit angibt, dass das Wi-Fi-Modul unsteuerbar ist, falls die elektronische Vorrichtung in den Standby-Zustand eintritt, sowohl die Wi-Fi-Kommunikationsfunktion als auch die zellulare Datenkommunikationsfunktion aktiviert sind, die Wi-Fi-Kommunikationsverbindung aufgebaut ist, und eine erste Funktion deaktiviert ist, Zurücksetzen des Wi-Fi-Verwaltungs- und -steuerungs-Flag-Bits, so dass das Wi-Fi-Verwaltungs- und -steuerungs-Flag-Bit angibt, dass das Wi-Fi-Modul steuerbar ist; und
wenn das Wi-Fi-Verwaltungs- und -steuerungs-Flag-Bit angibt, dass das Wi-Fi-Modul steuerbar ist, falls die elektronische Vorrichtung den Standby-Zustand verlässt, oder die Wi-Fi-Kommunikationsfunktion und die zellulare Datenkommunikationsfunktion nicht gleichzeitig aktiviert sind, oder die Wi-Fi-Kommunikationsverbindung getrennt ist, oder die erste Funktion aktiviert ist, Zurücksetzen des Wi-Fi-Verwaltungs- und -steuerungs-Flag-Bits, so dass das Wi-Fi-Verwaltungs- und -steuerungs-Flag-Bit angibt, dass das Wi-Fi-Modul unsteuerbar ist, wobei
die erste Funktion angibt, dass die elektronische Vorrichtung im Standby-Zustand eine Netzwerkverbindung aufrechterhält.

4. Verfahren nach Anspruch 1, ferner umfassend:
wenn das Wi-Fi-Verwaltungs- und -steuerungs-Flag-Bit angibt, dass das Wi-Fi-Modul unsteuerbar ist, falls die elektronische Vorrichtung in den Standby-Zustand eintritt, sowohl die Wi-Fi-Kommunikationsfunktion als auch die zellulare Datenkommunikationsfunktion aktiviert sind, die Wi-Fi-Kommunikationsverbindung aufgebaut ist, und eine zweite Funktion aktiviert ist, Zurücksetzen des Wi-Fi-Verwaltungs- und -steuerungs-Flag-Bits, so dass das Wi-Fi-Verwaltungs- und -steuerungs-Flag-Bit angibt, dass das Wi-Fi-Modul steuerbar ist; und
wenn das Wi-Fi-Verwaltungs- und -steuerungs-Flag-Bit angibt, dass das Wi-Fi-Modul steuerbar ist, falls die elektronische Vorrichtung den Standby-Zustand verlässt, oder die Wi-Fi-Kommunikationsfunktion und die zellulare Datenkommunikationsfunktion nicht gleichzeitig aktiviert sind, oder die Wi-Fi-Kommunikationsverbindung getrennt ist, oder die zweite Funktion deaktiviert ist, Zurücksetzen des Wi-Fi-Verwaltungs- und -steuerungs-Flag-Bits, so dass das Wi-Fi-Verwaltungs- und -steuerungs-Flag-Bit angibt, dass das Wi-Fi-Modul unsteuerbar ist, wobei
wenn die zweite Funktion deaktiviert ist, falls die elektronische Vorrichtung in den Standby-Zustand eintritt, das Wi-Fi-Modul automatisch ausgeschaltet wird.

5. Verfahren nach Anspruch 1, ferner umfassend:
wenn das Wi-Fi-Verwaltungs- und -steuerungs-Flag-Bit angibt, dass das Wi-Fi-Modul unsteuerbar ist, falls die elektronische Vorrichtung in den Standby-Zustand eintritt, sowohl die Wi-Fi-Kommunikationsfunktion als auch die zellulare Datenkommunikationsfunktion aktiviert sind, die Wi-Fi-Kommunikationsverbindung aufgebaut ist, eine erste Funktion deaktiviert ist, und eine zweite Funktion aktiviert ist, Zurücksetzen des Wi-Fi-Verwaltungs- und -steuerungs-Flag-Bits, so dass das Wi-Fi-Verwaltungs- und -steuerungs-Flag-Bit angibt, dass das Wi-Fi-Modul steuerbar ist; und
wenn das Wi-Fi-Verwaltungs- und -steuerungs-Flag-Bit angibt, dass das Wi-Fi-Modul steuerbar ist, falls die elektronische Vorrichtung den Standby-Zustand verlässt, oder die Wi-Fi-Kommunikationsfunktion und die zellulare Datenkommunikationsfunktion nicht gleichzeitig aktiviert sind, oder die Wi-Fi-Kommunikationsverbindung getrennt ist, oder die erste Funktion aktiviert ist, oder die zweite Funktion deaktiviert ist, Zurücksetzen des Wi-Fi-Verwaltungs- und -steuerungs-Flag-Bits, so dass das Wi-Fi-Verwaltungs- und -steuerungs-Flag-Bit angibt, dass das Wi-Fi-Modul unsteuerbar ist, wobei
die erste Funktion angibt, dass die elektronische Vorrichtung im Standby-Zustand eine Netzwerkverbindung aufrechterhält; und wenn die zweite Funktion deaktiviert ist, falls die elektronische Vorrichtung in den Standby-Zustand eintritt, das Wi-Fi-Modul automatisch ausgeschaltet wird.

6. Verfahren nach Anspruch 1, wobei das Identifizieren, basierend auf einem aktuellen Empfangsstatus des Zielpakets, ob ein Zielereignis vorliegt, umfasst:
falls sich die elektronische Vorrichtung im Standby-Zustand befindet, Identifizieren, basierend auf dem aktuellen Empfangsstatus des Zielpakets, ob das Zielereignis vorliegt.

7. Verfahren nach Anspruch 1, wobei nach dem Ausschalten des Wi-Fi-Moduls das Verfahren ferner umfasst:
Einschalten des Wi-Fi-Moduls als Reaktion auf eine empfangene Bildschirm-Ein-Operation;
oder falls erkannt wird, dass eine voreingestellte zellulare Datennetzanomalie in der elektronischen Vorrichtung vorliegt, Einschalten des Wi-Fi-Moduls.

8. Verfahren nach Anspruch 7, wobei die voreingestellte zellulare Datennetzanomalie zumindest umfasst:
eine zellulare Datennetztrennung, dass ein Datenverkehr einer SIM-Karte einen Schwellenwert erreicht oder kein verbleibender Datenverkehr vorhanden ist, und kein Dienst in einer zellularen Zelle, in der sich die elektronische Vorrichtung befindet.

9. Elektronische Vorrichtung (100), umfassend:
einen oder mehrere Prozessoren (110);
einen Speicher (121); und
ein oder mehrere Computerprogramme, wobei das eine oder die mehreren Computerprogramme in dem Speicher (121) gespeichert sind, und wenn das Computerprogramm von dem einen oder den mehreren Prozessoren (110) ausgeführt wird, die elektronische Vorrichtung (100) befähigt wird, das Verfahren zur Reduzierung des Stromverbrauchs nach einem der Ansprüche 1 bis 8 durchzuführen.

10. Computerlesbares Speichermedium, umfassend ein Computerprogramm, wobei, wenn das Computerprogramm auf einer elektronischen Vorrichtung (100) ausgeführt wird, die elektronische Vorrichtung (100) befähigt wird, das Verfahren zur Reduzierung des Stromverbrauchs nach einem der Ansprüche 1 bis 8 durchzuführen.

## Revendications

1. Procédé de réduction de la consommation d'énergie, appliqué à un dispositif électronique, dans lequel le dispositif électronique comprend un module Wi-Fi et un module de réseau mobile, et le procédé comprend :
l'obtention d'un paquet Wi-Fi qui est reçu ;
lorsque le paquet Wi-Fi est un paquet cible, l'identification, sur la base d'un état de réception actuel du paquet cible, du fait qu'il y a ou non un événement cible, dans lequel le paquet cible est reçu par le dispositif électronique dans un état de veille, et dans lequel l'identification, sur la base d'un état de réception actuel du paquet cible, du fait qu'il y a ou non un événement cible comprend :
la détermination, sur la base du fait que l'état de réception actuel du paquet cible satisfait ou non à une politique de gestion et de contrôle d'anomalie Wi-Fi prédéfinie, du fait qu'il y a ou non l'événement cible ;
dans lequel le fait que le paquet Wi-Fi est un paquet cible comprend :
lorsqu'un type de paquet du paquet Wi-Fi est un premier type, le paquet Wi-Fi est le paquet cible, dans lequel le premier type comprend : ICMP REQUEST, ICMP RESPONSE, et ICMPV6 RA ;
lorsque le type de paquet du paquet Wi-Fi est un deuxième type, et qu'un état d'un port de destination du paquet Wi-Fi est un état de non-écoute, le paquet Wi-Fi est le paquet cible, dans lequel le deuxième type comprend : IPV4 UDP et IPV6 UDP ;
lorsque le type de paquet du paquet Wi-Fi est un type inconnu, le paquet Wi-Fi est le paquet cible ;
s'il y a actuellement l'événement cible, la désactivation du module Wi-Fi lorsque le dispositif électronique satisfait à une condition imperceptible par l'utilisateur, dans lequel le fait que le dispositif électronique satisfait à une condition imperceptible par l'utilisateur comprend :
lorsqu'un bit d'indicateur de gestion et de commande Wi-Fi indique que le module Wi-Fi est contrôlable, et qu'il n'y a pas de service perceptible par l'utilisateur dans le dispositif électronique, le dispositif électronique satisfait à la condition imperceptible par l'utilisateur ;
dans lequel le procédé comprend en outre :
lorsque le bit d'indicateur de gestion et de commande Wi-Fi indique que le module Wi-Fi est incontrôlable, si le dispositif électronique entre dans l'état de veille, une fonction de communication Wi-Fi et une fonction de communication de données cellulaires sont toutes deux activées, et une connexion de communication Wi-Fi est établie, la réinitialisation du bit d'indicateur de gestion et de commande Wi-Fi, de sorte que le bit d'indicateur de gestion et de commande Wi-Fi indique que le module Wi-Fi est contrôlable ; et
lorsque le bit d'indicateur de gestion et de commande Wi-Fi indique que le module Wi-Fi est contrôlable, si le dispositif électronique quitte l'état de veille, ou la fonction de communication Wi-Fi et la fonction de communication de données cellulaires ne sont pas activées en même temps, ou la connexion de communication Wi-Fi est déconnectée, la réinitialisation du bit d'indicateur de gestion et de commande Wi-Fi, de sorte que le bit d'indicateur de gestion et de commande Wi-Fi indique que le module Wi-Fi est incontrôlable.

2. Procédé selon la revendication 1, dans lequel l'identification, sur la base d'un état de ré ception actuel du paquet cible, du fait qu'il y a ou non un événement cible comprend :
si une fréquence de réception du paquet cible atteint un premier seuil et une durée de réception atteint un deuxième seuil, la détermination du fait qu'il y a l'événement cible.

3. Procédé selon la revendication 1, comprenant en outre :
lorsque le bit d'indicateur de gestion et de commande Wi-Fi indique que le module Wi-Fi est incontrôlable, si le dispositif électronique entre dans l'état de veille, la fonction de communication Wi-Fi et la fonction de communication de données cellulaires sont toutes deux activées, la connexion de communication Wi-Fi est établie, et une première fonction est désactivée, la réinitialisation du bit d'indicateur de gestion et de commande Wi-Fi, de sorte que le bit d'indicateur de gestion et de commande Wi-Fi indique que le module Wi-Fi est contrôlable ; et
lorsque le bit d'indicateur de gestion et de commande Wi-Fi indique que le module Wi-Fi est contrôlable, si le dispositif électronique quitte l'état de veille, ou la fonction de communication Wi-Fi et la fonction de communication de données cellulaires ne sont pas activées en même temps, ou la connexion de communication Wi-Fi est déconnectée, ou la première fonction est activée, la réinitialisation du bit d'indicateur de gestion et de commande Wi-Fi, de sorte que le bit d'indicateur de gestion et de commande Wi-Fi indique que le module Wi-Fi est incontrôlable, dans lequel
la première fonction indique que le dispositif électronique maintient une connexion réseau dans l'état de veille.

4. Procédé selon la revendication 1, comprenant en outre :
lorsque le bit d'indicateur de gestion et de commande Wi-Fi indique que le module Wi-Fi est incontrôlable, si le dispositif électronique entre dans l'état de veille, la fonction de communication Wi-Fi et la fonction de communication de données cellulaires sont toutes deux activées, la connexion de communication Wi-Fi est établie, et une deuxième fonction est activée, la réinitialisation du bit d'indicateur de gestion et de commande Wi-Fi, de sorte que le bit d'indicateur de gestion et de commande Wi-Fi indique que le module Wi-Fi est contrôlable ; et
lorsque le bit d'indicateur de gestion et de commande Wi-Fi indique que le module Wi-Fi est contrôlable, si le dispositif électronique quitte l'état de veille, ou la fonction de communication Wi-Fi et la fonction de communication de données cellulaires ne sont pas activées en même temps, ou la connexion de communication Wi-Fi est déconnectée, ou la deuxième fonction est désactivée, la réinitialisation du bit d'indicateur de gestion et de commande Wi-Fi, de sorte que le bit d'indicateur de gestion et de commande Wi-Fi indique que le module Wi-Fi est incontrôlable, dans lequel
lorsque la deuxième fonction est désactivée, si le dispositif électronique entre dans l'état de veille, le module Wi-Fi est désactivé automatiquement.

5. Procédé selon la revendication 1, comprenant en outre :
lorsque le bit d'indicateur de gestion et de commande Wi-Fi indique que le module Wi-Fi est incontrôlable, si le dispositif électronique entre dans l'état de veille, la fonction de communication Wi-Fi et la fonction de communication de données cellulaires sont toutes deux activées, la connexion de communication Wi-Fi est établie, une première fonction est désactivée, et une deuxième fonction est activée, la réinitialisation du bit d'indicateur de gestion et de commande Wi-Fi, de sorte que le bit d'indicateur de gestion et de commande Wi-Fi indique que le module Wi-Fi est contrôlable ; et
lorsque le bit d'indicateur de gestion et de commande Wi-Fi indique que le module Wi-Fi est contrôlable, si le dispositif électronique quitte l'état de veille, ou la fonction de communication Wi-Fi et la fonction de communication de données cellulaires ne sont pas activées en même temps, ou la connexion de communication Wi-Fi est déconnectée, ou la première fonction est activée, ou la deuxième fonction est désactivée, la réinitialisation du bit d'indicateur de gestion et de commande Wi-Fi, de sorte que le bit d'indicateur de gestion et de commande Wi-Fi indique que le module Wi-Fi est incontrôlable, dans lequel
la première fonction indique que le dispositif électronique maintient une connexion réseau dans l'état de veille ; et lorsque la deuxième fonction est désactivée, si le dispositif électronique entre dans l'état de veille, le module Wi-Fi est désactivé automatiquement.

6. Procédé selon la revendication 1, dans lequel l'identification, sur la base d'un état de ré ception actuel du paquet cible, du fait qu'il y a ou non un événement cible comprend :
si le dispositif électronique est dans l'état de veille, l'identification, sur la base de l'état de réception actuel du paquet cible, du fait qu'il y a ou non l'événement cible.

7. Procédé selon la revendication 1, dans lequel après la désactivation du module Wi-Fi, le procédé comprend en outre :
l'activation du module Wi-Fi en réponse à une opération d'allumage d'écran reçue ;
ou s'il est détecté qu'il y a une anomalie de réseau de données cellulaires prédéfinie dans le dispositif électronique, l'activation du module Wi-Fi.

8. Procédé selon la revendication 7, dans lequel l'anomalie de réseau de données cellulaires pr édéfinie comprend au moins :
une déconnexion de réseau de données cellulaires, le fait qu'un trafic d'une carte SIM atteint un seuil ou une absence de trafic restant, et une absence de service dans une cellule cellulaire dans laquelle se trouve le dispositif électronique.

9. Dispositif électronique (100), comprenant :
un ou plusieurs processeurs (110) ;
une mémoire (121) ; et
un ou plusieurs programmes informatiques, dans lequel les un ou plusieurs programmes informatiques sont stockés dans la mémoire (121), et lorsque le programme informatique est exécuté par les un ou plusieurs processeurs (110), le dispositif électronique (100) est rendu capable de réaliser le procédé de réduction de consommation d'énergie selon l'une quelconque des revendications 1 à 8.

10. Support de stockage lisible par ordinateur, comprenant un programme informatique, dans lequel lorsque le programme informatique est exécuté sur un dispositif électronique (100), le dispositif électronique (100) est rendu capable de réaliser le procédé de réduction de consommation d'énergie selon l'une quelconque des revendications 1 à 8.
